# EUROPÄISCHE PATENTSCHRIFT

(11) **EP 2 430 723 B1**
(45) Veröffentlichungstag und Bekanntmachung des Hinweises auf die Patenterteilung: **28.12.2016**
(21) Anmeldenummer: 10717645.5
(22) Anmeldetag: 05.05.2010
(51) Int. Cl.: H02J 13/00

(54) **VERFAHREN UND VORRICHTUNG ZUM GERICHTETEN ÜBERTRAGEN ELEKTRISCHER ENERGIE IN EINEM ELEKTRISCHEN VERSORGUNGSNETZ**
METHOD AND APPARATUS FOR THE DIRECTIONAL TRANSMISSION OF ELECTRICITY IN AN ELECTRICITY GRID
PROCÉDÉ ET DISPOSITIF DE LIVRAISON DIRECTIONNELLE D'ÉNERGIE ÉLECTRIQUE DANS UN RÉSEAU D'ALIMENTATION ÉLECTRIQUE

(30) Priorität: 15.05.2009 DE 102009003173
(43) Veröffentlichungstag der Anmeldung: 21.03.2012
(73) Patentinhaber: GIP AG, 55131 Mainz (DE)
(72) Erfinder: REIFENHÄUSER, Bernd, 55131 Mainz (DE); EBBES, Alexander, 55268 Nieder-Olm (DE)
(74) Vertreter: WSL Patentanwälte Partnerschaft mbB
(86) Internationale Anmeldenummer: PCT/EP2010/056114
(87) Internationale Veröffentlichungsnummer: WO 2010/130615

(56) Entgegenhaltungen:
- WO-A1-00/13287
- WO-A1-2008/109684
- WO-A1-2009/040140
- WO-A2-2010/057947
- DE-A1-102006 043 831
- US-A1- 2007 055 636
- US-A1- 2007 062 744
- US-B1- 6 792 259
- TOYODA J ET AL: "Proposal of an open-electric-energy-network (OEEN) to realize cooperative operations of IOU and IPP", ENERGY MANAGEMENT AND POWER DELIVERY, 1998. PROCEEDINGS OF EMPD '98. 1 998 INTERNATIONAL CONFERENCE ON SINGAPORE 3-5 MARCH 1998, NEW YORK, NY, USA,IEEE, US, vol. 1, 3 March 1998 (1998-03-03), pages 218-222, XP010293789, DOI: 10.1109/EMPD.1998.705515 ISBN: 978-0-7803-4495-2

## Beschreibung

Die vorliegende Erfindung betrifft ein Verfahren zum gerichteten Übertragen elektrischer Energie in einem elektrischen Versorgungsnetz sowie ein Verfahren zur Übertragung elektrischer Energie über ein elektrisches Versorgungsnetz mit mindestens einem Erzeuger für elektrische Energie, mindestens einem Netzwerkknoten und mindestens einem Abnehmer.

Darüber hinaus betrifft die vorliegende Erfindung einen Netzwerkknoten zum gerichteten Übertragen elektrischer Energie in einem elektrischen Versorgungsnetz sowie ein elektrisches Versorgungsnetz mit mindestens einem Erzeuger für elektrische Energie, mindestens einem Netzwerkknoten und mindestens einem Abnehmer.

Bekannte elektrische Versorgungsnetze stellen durch eine statische Schaltung des Netzes die Versorgung der einzelnen Verbraucher bzw. Abnehmer sicher. Dabei wird das Netz so geschaltet, dass es einen oder eine Mehrzahl von Abnehmern über eine Anzahl von Zwischenstationen mit einem Energieerzeuger, z.B. einem Großkraftwerk oder auch einer dezentralen Anlage zur Erzeugung regenerativer Energie, beispielsweise einer Windkraftanlage, verbindet.

Die Schaltung eines solchen Versorgungsnetzes kann durch eine zentrale Steuerung im Betrieb verändert werden, sodass mehr oder weniger Abnehmer mit einem einzigen Energieerzeuger verbunden werden können oder auch die Anzahl der mit dem Versorgungsnetz verbundenen Energieerzeuger variiert werden kann. Darüber hinaus können die Energieerzeuger ihre in das Versorgungsnetz eingespeiste Leistung bzw. Energie variieren.

Solche zentral gesteuerten und permanent geschalteten Versorgungsnetze können eine dauerhafte Energieversorgung aller Abnehmer nur dadurch sicherstellen, dass sie permanent eine Überversorgung, d. h. Energie über den eigentlichen Bedarf der Abnehmer hinaus, bereitstellen. Zwar kann diese Überversorgung mit Hilfe von Prognosemodellen an die bekannten Anforderungen der Abnehmer in etwa angepasst werden, trotzdem stellen sich diese elektrischen Versorgungsnetze als nicht bedarfsgerecht, unflexibel und ineffizient heraus.

Es sind aus dem Stand der Technik auch schon bedarfsorientierte Verfahren und Systeme zur Übertragung elektrischer Energie bekannt. Diesen gemeinsam ist, dass sie neben der Fähigkeit zur Energieübertragung zwischen den Energieerzeugern und den Energieabnehmern auch eine Kommunikation zwischen den Abnehmern und den Erzeugern ermöglichen und es somit erlauben, den aktuellen Bedarf von den Abnehmern an die Erzeuger zu übermitteln und die Energieerzeugung an den momentanen Bedarf anzupassen. Solche Systeme werden im Englischen als "Smart Grid" bezeichnet.

Auch diese derzeit geplanten Smart Grids stellen nur zentral gesteuerte Versorgungsnetze bereit, die es nicht ermöglichen, ohne prognostische Methoden auf Änderungen, insbesondere auf kurzfristige Schwankungen, der erzeugten Energiemenge auf der Erzeugerseite zu reagieren. Vor allem bei Steigerung des Anteils an regenerativer Energie kommt es aber zu erheblichen Schwankungen auf der Angebotsseite. So hängt beispielsweise die von einem Windenergiepark bereitgestellte Energiemenge von den momentanen Windverhältnissen ab. Die zur Verfügung gestellte Energiemenge ist daher hochgradig volatil. Beispielsweise muss während einer Flaute zur Bedarfsdeckung kurzfristig Energie von anderen Energieerzeugern bereitstellt werden.

J. Toyoda et al. offenbaren in dem Aufsatz "Proposal of an open-electric-energy-network (OEEN) to realize cooperative operations of IOU and IPP", Energy Management and Power Delivery, 1998. Proceedings of EMPD '98. 1998 International Conference in Singapore 3-5 March 1998, New York, NY, USA, IEEE, US, Bd. 1, 3. März 1998, Seiten 218-222, XP010293789, ein Verfahren zur paketbasierten Übertragung elektrischer Energie über ein elektrisches Versorgungsnetz, wobei die zu übertragenen Energiepakete durch die zu übertragende Leistung in Abhängigkeit von der Zeit definiert sind. Dabei erfolgt die Formung der Energiepakete durch eine verbraucherseitige Laststeuerung.

Demgegenüber ist es Aufgabe der vorliegenden Erfindung ein Verfahren und ein System zur Übertragung elektrischer Energie bereitzustellen, welches in hohem Maße flexibel ist und es ermöglicht, die Energieverteilung in einem Versorgungsnetz dynamisch zu gestalten, um auch kurzfristig auftretenden Schwankungen sowohl auf Angebots- als auch auf Nachfrageseite zu begegnen.

Es ist darüber hinaus eine Aufgabe der vorliegenden Erfindung ein Verfahren und ein System zur Übertragung elektrischer Energie bereitzustellen, welches ohne eine zentrale, übergeordnete Steuerungsinstanz bzw. -institution auskommt.

Weiterhin ist es eine Aufgabe der vorliegenden Erfindung, ein Verfahren und ein System zur Übertragung elektrischer Energie bereitzustellen, das es Abnehmern von elektrischer Energie ermöglicht, die Energie zu marktgerechten Konditionen einzukaufen.

Zumindest eine der zuvor genannten Aufgaben wird durch ein Verfahren zum gerichteten Übertragen elektrischer Energie in einem elektrischen Versorgungsnetz gemäß dem unabhängigen Anspruch 1 gelöst.

Dabei können die einzelnen Schritte zeitlich nacheinander (sequenziell) oder auch parallel abgearbeitet werden.

Das erfindungsgemäße Verfahren ermöglicht eine flexible Übertragung elektrischer Energie von einem Erzeuger über ein elektrisches Versorgungsnetz mit einem oder einer Mehrzahl von Netzwerkknoten zu einem Abnehmer.

Das erfindungsgemäße Verfahren zur gerichteten Energieübertragung wird nachfolgen kurz als Smart Grit Routing oder Routing der elektrischen Energie bezeichnet.

Dabei erfolgt die Energieübertragung anders als im Stand der Technik nicht durch die Bereitstellung einer statischen Netzwerktrasse von einem Kraftwerk zu einem Abnehmer und nachfolgendem Einschalten eines Verbrauchsgeräts und damit einer Energieübertragung, d. h. des Stromflusses im Umfang des aktuellen Verbrauchs, sondern in Form von Energiepaketen, die an den Netzwerkknoten dynamisch geroutet werden.

Routen bedeutet im Sinne der vorliegenden Anmeldung, dass wie im paketvermittelten Internet der Weg vom Erzeuger zum Abnehmer für jede Übertragung eines Pakets bestimmt werden muss. Dazu wird in einer Ausführungsform der Weg oder Pfad mittels der bekannten Wegfindungs- oder Routingalgorithmen berechnet.

Eine solche paketbasierte Energieübertragung weist eine Analogie zur paketbasierten Informationsübertragung auf, wobei die in einem Datennetzwerk als Nutzlast zu übertragende Information zumindest teilweise durch das zu übertragende Energiepaket ersetzt ist.

Ein Energiepaket im Sinne der vorliegenden Erfindung ist elektrische Energie in einer Menge und mit einer Spannung, die ausreicht, bei dem Abnehmer eine elektrische Vorrichtung, insbesondere einen Haushaltsgegenstand oder eine Beleuchtung, zu betreiben. Davon zu unterscheiden ist die Übertragung elektrischer Energie zur reinen Informationsübermittlung. Vorzugsweise weist das Energiepaket eine Gleichspannung oder eine Wechselspannung im Mittel von mindestens 20 Volt, im Mittel vorzugsweise von mindestens 50 Volt Gleichspannung und im Mittel von mindestens 100 Volt Wechselspannung auf.

Um ein solches dynamisches Routing zu ermöglichen, ist dem Energiepaket ein Datenpaket zugeordnet, welches an den gleichen Empfänger wie das Datenpaket übertragen wird und das die für das Routing erforderliche Information enthält. Vorzugsweise ist jedem Energiepaket mindestens ein, besonders bevorzugt aber genau ein Datenpaket zugeordnet.

Anhand der im Datenpaket enthaltenen Information wird beim Routing des Datenpakets bestimmt, an welchen Empfänger das Datenpaket und das Energiepaket übertragen werden müssen. Dabei wird als Empfänger im Sinne der vorliegenden Anmeldung das nächste Element in dem Netzwerk verstanden. Dies kann ein Netzwerkknoten oder ein Abnehmer sein.

Um ein Routing des Energiepakets zu ermöglichen, weist das dem Energiepaket zugeordnete Datenpaket in einer Ausführungsform eine eindeutige Adressierung des Erzeugers des Energiepakets auf. In einer weiteren Ausführungsform weist das Datenpaket eine eindeutige Adressierung des Abnehmers des Energiepakets, nachfolgend auch als Zieladresse bezeichnet, auf. Auf diese Weise kann sowohl die Herkunft als auch das Ziel eines jeweiligen Energiepakets definiert werden, wodurch ein Routing an den einzelnen beteiligten Elementen eines Netzes möglich wird.

In einer Ausführungsform weist das Datenpaket einen Kopfdatenbereich auf, in dem vorzugsweise die Adressierungen des Erzeugers und/oder Abnehmers enthalten sind.

Das Bestimmen des nächsten Empfängers innerhalb des Netzes geschieht beispielsweise durch Auslesen der Adressierung des in dem Datenpaket angegebenen Abnehmers und Nachschlagen des nächsten Empfängers in einer gespeicherten Routingtabelle.

In einer Ausführungsform berechnet der Erzeuger in dem Versorgungsnetz oder allgemeiner ein Lieferknoten einen Pfad für das jeweilige Energiepaket durch das Netz und überträgt vorzugsweise eine Pfadtabelle in dem Datenpaket, das dem zu übertragenden Energiepaket zugeordnet ist.

Das erfindungsgemäße Routing erfolgt vorzugsweise in einem Netzwerkknoten des Netzes. Im Sinne der vorliegenden Erfindung sind zumindest in einer Ausführungsform auch der Erzeuger und der Abnehmer besonders ausgezeichnete Netzwerkknoten. Sie bilden Anfang und Ende einer Netzwerkverbindung.

In einer Ausführungsform definiert das Datenpaket nicht nur die Energiemenge des ihm zugeordneten Energiepakets sondern auch ein Leistungsprofil, d.h. die pro Zeiteinheit bereitzustellende Energiemenge für das Paket.

In einer solchen Ausführungsform des Verfahrens erfolgt die Anforderung bzw. Bestellung einer Energiemenge über die Angabe eines Leistungsprofils, d.h., einer Vorgabe zu welcher Zeit welche Leistung maximal bereitgestellt werden soll.

Dieses Leistungsprofil bestimmt den zeitlichen Verlauf der maximal von einem Energiepaket bereitgestellten Leistung, d.h. den zeitlichen Verlauf der Spannung U(t) und des elektrischen Stroms I(t) sowie die zeitliche Dauer T des zu übertragenden Energiepakets.

Das erfindungsgemäße Verfahren umfasst dabei weiterhin die Schritte: Festlegen eines Leistungsprofils TP(t) für das zu übertragende Energiepaket, wobei das Leistungsprofil festlegt, welche Leistung für das Energiepaket zu einem Zeitpunkt t maximal übertragen wird, und Übertragen eines Energiepakets mit dem festgelegten Leistungsprofil TP(t).

In einer Ausführungsform wird das Leistungsprofil TP(t) dem zu übertragenden Energiepaket dadurch aufgeprägt, dass ein Leistungsventil im Ausgang des Netzwerkknotens so gesteuert wird, dass zu keinem Zeitpunkt eine Leistung übertragen werden kann, welche die durch das Leistungsprofil für diesen Zeitpunkt definierte Sollleistung übersteigt.

Darüber hinaus wird das Leistungsprofil TP(t) als Information mit dem Datenpaket, welches dem zu übertragenden Energiepaket zugeordnet ist, an den Empfänger übertragen.

Das Leistungsprofil TP(t), im folgenden Text auch als Transportprofil bezeichnet, für das zu über tragende Energiepaket, im folgenden Text auch als Transportpaket bezeichnet, ist im einfachsten Fall, bei dem zu einem Zeitpunkt nur ein einziges Energiepaket empfangen wird und dieses Energiepaket über eine einzige Leitung zu übertragen ist, identisch mit dem Leistungsprofil des empfangenen Energiepakets.

Darüber hinaus umfasst das Verfahren die Schritte: Auswählen einer Leitung für die Übertragung des Energiepakets mit Hilfe der in dem Datenpaket enthaltenen Information, Freischalten der ausgewählten Leitung mit Hilfe eines steuerbaren Schalters. Regeln der zu einem Zeitpunkt t übertragenen Leistung anhand des Leistungsprofils TP(t) des zu übertragenden Energiepakets mit Hilfe des steuerbaren Schalters.

In komplexeren Situationen werden von einem Netzwerkknoten zwei oder mehr Energiepakete empfangen, die, vorzugsweise gleichzeitig, über ein und dieselbe Leitung zu übertragen sind.

Vorzugsweise weist das erfindungsgemäße Verfahren daher weiterhin die Schritte auf: Zusammenfassen einer Mehrzahl von empfangenen Energiepakten zu einem zu übertragenden Energiepaket bzw. Transportpaket, wobei jedes der empfangenen Energiepakete ein Leistungsprofil P(t) aufweist, welches festlegt, welche maximale Leistung das Energiepaket zu einem Zeitpunkt t bereitstellt, wobei beim Zusammenfassen die Leistungsprofile P(t) der empfangenen Energiepakete zu einem Leistungsprofil TP(t) bzw. Transportprofil des zu übertragenden Energiepakets bzw. Transportpakets addiert werden, und Übertragen der Zieladressen und der Leistungsprofile P(t) der empfangenen Energiepakete in einem dem zu übertragenden Energiepaket zugeordneten Datenpaket an den Empfänger.

Andererseits müssen empfangene Energiepakete, die eine Mehrzahl von Energiepaketen enthalten beispielsweise an einem Netzwerkknoten getrennt und an unterschiedliche Empfänger weitergeleitet bzw. übertragen werden. Daher ist es zweckmäßig, wenn in einer Ausführungsform das erfindungsgemäße Verfahren die folgenden Schritte aufweist: Zerlegen eines empfangenen Energiepakets in eine Mehrzahl von zu übertragenden Energiepaketen, wobei das dem empfangenen Energiepaket zugeordnete Datenpaket Informationen über die Zieladressen und die Leistungsprofile der zu übertragenden Energiepakete enthält, Übertragen der zu übertragenden Energiepakete mit den ihnen zugeordneten Leistungsprofilen an jeweils einen Empfänger, und Übertragen der den zu übertragenden Energiepaketen zugeordneten Datenpakete an die gleichen Empfänger wie die Energiepakete.
Wenn im Sinne der vorliegenden Anmeldung davon die Rede ist, dass das dem Energiepaket zugeordnete Datenpaket mit dem Energiepaket übertragen wird oder das Energiepaket an den an den gleichen Empfänger wie das Datenpaket übertragen wird, so ist darunter zu verstehen, dass das Datenpaket und das Energiepaket den gleichen Weg in dem Netzwerk auf dem Weg von dem Erzeuger zu dem Abnehmer durchlaufen, da das Datenpaket die für das Routing des Energiepakets an den einzelnen Netzwerkknoten erforderlichen Informationen enthält.

Eine Übertragung des Datenpakets und des Energiepakets im Sinne der vorliegenden Anmeldung kann bedeuten, dass sowohl das Datenpaket als auch das Energiepaket über das gleiche physikalische Netzwerk, d. h. die identische Leitung, übertragen werden. In einer solchen Ausführungsform ist das Datennetzwerk für das Datenpaket ein sogenanntes Power Line Netzwerk, bei welchem das Datenpaket zur Informationsübertragung auf den zu übertragenden Strom zur Energieversorgung aufmoduliert wird. Die dafür erforderliche Technik ist als Trägerfrequenzanlage zur Datenübertragung über Stromnetze aus dem Stand der Technik bestens bekannt.

In einer alternativen Ausführungsform erfolgt die Übertragung von Energiepaket und Datenpaket zumindest zwischen den einzelnen Netzwerkknoten über physikalisch getrennte Netzwerke, d. h. beispielsweise über zumindest zwei verschiedene Leitungen, eine Leitung und eine Funkverbindung oder eine Leitung und einen weiteren Übertragungskanal. In einer Ausführungsform sind alle Verbindungen zwischen den Elementen des Netzes, d.h. Erzeugern, Netzwerkknoten und Abnehmern zweifach ausgebildet, einmal als elektrisches Versorgungsnetz zur Übertragung der Energiepakete und einmal als Datennetzwerk zur Übertragung der den Energiepaketen zugeordneten Datenpaketen.

Die Übertragung von Datenpaket und Energiepaket erfolgt jedoch auch in einer solchen Ausführungsform mit getrennten physikalischen Netzen zweckmäßigerweise in dem gleichen logischen Netzwerk, das eine Transportebene und eine Signalisierungs- und Kontrollebene (SCP) aufweist. Die Übertragung des Energiepakets erfolgt vorzugsweise in der Transportebene.

In einer Ausführungsform der Erfindung erfolgt die Übertragung der Datenpakete mit IP-Technologie, welche das wohlbekannte Internetprotokoll zur Datenübertragung verwendet. In einem Datenpaket nach dem Internetprotokoll wäre die eindeutige Adressierung des Erzeugers und/oder des Abnehmers des Energiepakets im Kopfdatenbereich (IP-Header) enthalten.

Dabei erfolgt das Routing autonom, d. h. ohne eine übergeordnete zentrale Steuerung. Beispielsweise anhand von Routingtabellen kann beim Routing die Entscheidung in Abhängigkeit von der Adressierung des Abnehmers getroffen werden, an welchen Empfänger das Energiepaket als Nächstes zu übertragen ist. Jedoch sind alternativ auch andere Routingalgorithmen zur Pfadermittlung geeignet.

Ferner erfolgt das Routing selbstorganisiert, d. h. im Sinne der vorliegenden Anmeldung, dass Änderungen des Netzwerks, beispielsweise das Hinzufügen oder Entfernen von Netzwerkknoten oder das Hinzufügen oder Entfernen von Verbindungen zwischen Netzwerkknoten durch das System selbst erkannt werden, ohne dass es dafür einer übergeordneten Instanz im Sinne eines zentralen Servers oder Ähnlichem bedarf. Dabei schaffen lokale, d.h. in den einzelnen Netzwerkknoten anzuwendende Regeln globale Strukturen sowohl für die Kontroll- als auch für die Transportebene.

Das erfindungsgemäße Routing kann in einer Ausführungsform weiterhin den Schritt aufweisen, dass festgelegt wird, welche zeitliche Dauer T das zu übertragende Energiepaket aufweist, d.h., welche Energie das Energiepaket enthält. Vorzugsweise ist ein die zeitliche Dauer des Energiepakets ein ganzzahliges Vielfaches der zeitlichen Dauer dt eines elementaren Energieframes.

Die zeitliche Dauer eines Energiepakets auf seinem Weg durch das Versorgungsnetz von dem Erzeuger zu einem Abnehmer kann sich ändern.

Mehrere Energiepakete können beim Transport durch das Netz zusammengefasst werden oder ein Paket kann beim Transport in mehrere kleinere Pakete zerlegt werden.

Zum einen kann ein großes Energiepaket in mehrere kleine Pakete aufgeteilt werden. Vorzugsweise besteht ein großes Energiepaket in diesem Sinne aus einem ganzzahligen Vielfachen eines virtuellen elementaren Energieframes, der eine konstante Energiemenge über alle Spannungsebenen des Versorgungsnetzes hinweg aufweist. An einem Netzwerkknoten kann dann das große Energiepaket in eine Mehrzahl von kleineren Energiepaketen aufgeteilt werden, wobei jedes der kleineren Energiepakete wieder aus einem ganzzahligen Vielfachen von virtuellen elementaren Energieframes besteht. Beispielsweise wird von einem Großkraftwerk über ein Hochspannungsnetz ein großes Energiepaket bereitgestellt, das an einem Netzwerkknoten in eine Mehrzahl von kleineren Energiepaketen aufgeteilt wird, deren Energie in der Summe der Energie des ursprünglichen Energiepakets entspricht.

An einem Netzwerkknoten können jedoch auch die von verschiedenen Erzeugern bereitgestellten Pakete zur Übertragung zu einem Paket, welches auch als Transportpaket bezeichnet wird, zusammengefasst werden, wobei die zu den einzelnen Paketen gehörenden Leistungsprofile addiert werden, um ein Leistungsprofil für das von diesem Netzwerkknoten zu übertragende Energiepaket zu erzeugen. Durch die parallele Übertragung der Informationen über die einzelnen Leistungsprofile der zusammengefassten Energiepakete sowie der Zieladressen der einzelnen Pakete kann dann am Zielknoten des Transportpakets dieses wieder in die einzelnen Pakete zerlegt werden, die dann an ihre jeweilige Zieladresse weiter geroutet werden können.

Eine weitere Änderung der zeitlichen Dauer eines Energiepakets oder seines Leistungsprofils entsteht beim Übergang zwischen den Spannungsebenen des elektrischen Versorgungsnetzes. Da beim Heruntertransformieren die Energiemenge des Pakets im Wesentlichen konstant beleibt, führt die Änderung der Spannung (bei konstantem Strom) zu einer Verlängerung der zeitlichen Dauer des Pakets.

Insbesondere geht das Datenpaket dem jeweiligen Energiepaket zeitlich voraus, um die erforderliche Schaltung in dem Router für das Energiepaket zu veranlassen, bevor dieses an dem jeweiligen Netzwerkknoten eintrifft. Mit anderen Worten ausgedrückt wird in einer solchen Ausführungsform die Trasse zur Übertragung des jeweiligen Energiepakets aufgebaut, bevor das Energiepaket an den einzelnen beteiligten Netzwerkknoten eintrifft.

In einer Ausführungsform des erfindungsgemäßen Verfahrens wird auch ein Datenpaket von einem Abnehmer an einen Netzwerkknoten oder einen Erzeuger übertragen. Ein solches Datenpaket kann unterschiedliche Informationen enthalten, beispielsweise eine Anfrage für die Bereitstellung eines Energiepakets von dem Erzeuger an den Abnehmer, einen "Handshake" nach erfolgter Übertragung eines Energiepakets von dem Erzeuger an den Abnehmer oder auch zur Aushandlung eines Preises, zu welchem das Energiepaket bereitgestellt werden soll. Auf diese Weise wird eine bidirektionale Kommunikation zwischen den einzelnen Elementen des Netzes ermöglicht. Dabei kann die Übertragung von Datenpaketen in der zu der Übertragung der Energiepakete entgegengesetzten Richtung über das gleiche Netzwerk erfolgen wie die Übertragung der den Energiepaketen zugeordneten Datenpakete oder alternativ auch über ein davon getrenntes Datennetzwerk, beispielsweise ein Funknetzwerk, insbesondere auch über das Internet.

In einer weiteren Ausführungsform können neben den Datenpaketen, die einem Energiepaket zugeordnet sind, auch weitere Datenpakete von dem Energieerzeuger zu dem Abnehmer übertragen werden, die ausschließlich zur Datenkommunikation zwischen Erzeuger und Abnehmer dienen, ohne dass mit ihnen auch Energiepakete übertragen werden.

In einer Ausführungsform verfügt das erfindungsgemäße Verfahren über eine Leistungsbegrenzung, welche verhindert, dass ein Verbraucher mehr Leistung abnimmt, als er angefordert hat. Dabei ist die Obergrenze der Leistung zu einem jeden Zeitpunkt durch das Leistungsprofil des Pakets definiert. Dies steht im Gegensatz zu herkömmlichen Netzen, bei denen ein Abnehmer dem Netz soviel Leistung entnimmt, wie er momentan benötigt.

Eine solche Leistungsbegrenzung setzt in einer Ausführungsform die Annahme voraus, dass tatsächlich alle bereitgestellten Energiepakete auch von dem Abnehmer abgenommen werden, der sie angefordert hat. Die Realisierung dieser Annahme setzt in der Regel das Vorhandensein von Energiespeichern auf Abnehmerseite voraus. Die dem Abnehmer bereitgestellte Leistung wird in einer ersten Ausführungsform durch Herunterregeln der Spannung mit entsprechenden Stellern, die auch als Leistungsventile bezeichnet werden, auf der Leitung des Abnehmers bei Erreichen der für ein bestimmtes Zeitintervall angeforderten Leistung erreicht.

Alternativ kann eine Leistungsbegrenzung auch durch ein Zeitmultiplex der Energiepakete erzielt werden, so dass der Abnehmer lediglich vorgibt, wie viel Energie, d.h. wie viele Energiepakete, er insgesamt abnehmen will. Ist die Zahl der zu liefernden Energiepakete erreicht, so endet die Bereitstellung der Pakete.

Zumindest eine der zuvor genannten Aufgaben wird auch durch ein elektrisches Versorgungsnetz gemäß dem unabhängigen Anspruch 10 zum gerichteten Übertragen elektrische Energie gelöst.
Der Netzwerkknoten kann die Zieladresse des Datenpakets sowohl zum gerichteten Übertragen, d.h. Routing, des Datenpakets als auch zum gerichteten Übertragen, d.h. Routing, des Energiepakets verwenden.

In einer Ausführungsform ist die Einrichtung zum Bestimmen des Empfängers eine Einrichtung zum Bestimmen des Weges bzw. Pfades für das Datenpaket durch ein Datennetz sowie zum Bestimmen des Weges bzw. Pfades für das Energiepaket durch ein Stromnetzwerk.

Der Netzwerkknoten verfügt insbesondere über eine Einrichtung für die Leistungsregelung für den Transport des Energiepaketes, so dass in der Zeit T das Energiepaket übertragen wird.

Ein solcher erfindungsgemäßer Netzwerkknoten wird im Folgenden daher als Smart Grid Router (kurz SGR) oder kurz als Router bezeichnet.

Ein derartiger Router ist zweckmäßigerweise in einem Netzwerkknoten und/oder einem Erzeuger und/oder einem Abnehmer eines Versorgungsnetzes angeordnet.

Bevorzugt ist eine Ausführungsform des erfindungsgemäßen Routers, bei welchem die Einrichtung zur Übertragung des Energiepakets und die Einrichtung zur Übertragung des dem Energie paket zugeordneten Datenpakets mit zwei physikalisch zu unterscheidenden Netzen verbunden sind.

Dazu ist in einer Ausführungsform der Erfindung neben dem elektrischen Versorgungsnetz ein dazu paralleles Datennetzwerk zugeordnet, welche vorzugsweise zusammen ein logisches Netzwerk bilden.

In einer weiteren Ausführungsform weist das logische Netzwerk aus Versorgungsnetz und Datennetzwerk eine Transportebene und eine Signalisierungs- und Kontrollebene (SCP) auf. Diese beiden Ebenen sind dann auch in dem erfindungsgemäßen Router realisiert.

In einer Ausführungsform ist die Transportebene des Netzwerks in zwei physikalische Netze aufgeteilt. Über ein erstes Netz wird die von dem Erzeuger an den Abnehmer zu liefernde elektrische Energie übertragen, während über das zweite Netz die erforderliche Datenkommunikation mit Datenpaketen, vorzugsweise bidirektional, zwischen den Elementen des Netzwerks stattfindet. Die Signalisierungs- und Kontrollebene kommuniziert über das Datennetzwerk.

In einer bevorzugten Ausführungsform ist die Signalisierungs- und Kontrollebene mit einem Next Generation Network (NGN), vorzugsweise mit einem IP-Netz realisiert. Als Signalisierungsprotokoll in der Signalisierungs- und Kontrollebene kann vorzugsweise SIP (Session Initiated Protokol) wie beispielsweise in RFC 3261 spezifiziert dienen.

Dabei wird als physikalisches Netz im Sinne der vorliegenden Anmeldung der physikalische Übertragungsweg angesehen, so wie er als Schicht 1 im OSI-Schichtenmodell als Bit-Übertragungsschicht festgelegt ist.

In einer Ausführungsform weist die Einrichtung zum Übertragen des Energiepakets einen steuerbaren Schalter, welcher auch als Leistungsventil bezeichnet wird, auf, der so mit der Einrichtung zum Übertragen des Datenpakets verbunden ist, dass er von dieser ansteuerbar ist. Ein Beispiel für einen solchen Schalter ist ein GTO-Thyristor.

Dabei erfolgt zweckmäßigerweise die Übertragung eines Energiepaktes zwischen zwei Knoten dadurch, dass die verbindende Leitung zwischen den Knoten von beiden Knoten bzw. von den Leistungsventilen beider Knoten freigeschaltet wird und der über diese Leitung fließende Strom durch zumindest eines der Leistungsventile geregelt wird.

Zumindest eine der zuvor genannten Aufgaben wird auch durch ein elektrisches Versorgungsnetz gelöst, mit mindestens einem Erzeuger für elektrische Energie, mindestens einem Netzwerkknoten und mindestens einem Abnehmer, wobei der Erzeuger, der Netzwerkknoten und der Abnehmer so eingerichtet und so miteinander verbunden sind, dass im Betrieb elektrische Energie in Form mindestens eines Energiepakets mit einer vorgegebenen Energiemenge von dem Erzeuger über den Netzwerkknoten zu dem Abnehmer übertragbar ist, wobei der Erzeuger, der Netzwerkknoten und der Abnehmer so eingerichtet und so miteinander verbunden sind, dass im Betrieb ein dem Energiepaket zugeordnetes Datenpaket von dem Erzeuger über den Netzwerkknoten zu dem Abnehmer übertragbar ist, wobei der Netzwerkknoten einen erfindungsgemäßen Netzwerkknoten zur gerichteten Übertragung des Energiepakets unter Verwendung des Datenpakets aufweist, so wie er zuvor beschrieben wurde.

In einer Ausführungsform der Erfindung weisen auch der Erzeuger und/oder der Abnehmer jeweils eine Einrichtung zum Übertragen eines Energiepakets auf.

In einer weiteren Ausführungsform weisen zumindest der Abnehmer und/oder der Netzwerkknoten eine Einrichtung zum Empfangen eines Energiepakets auf.

In einer weiteren Ausführungsform jedoch weist auch der Abnehmer eine Einrichtung zum Übertragen eines Datenpakets auf, sodass eine bidirektionale Kommunikation zwischen den einzelnen Elementen des Netzwerks bereitgestellt wird.

In einer bevorzugten Ausführungsform der Erfindung weisen der Erzeuger, der Netzwerkknoten und/oder Abnehmer einen Speicher für elektrische Energie auf. Ein solcher Energiespeicher ermöglicht es insbesondere dem Abnehmer Energiepakete dann zu beziehen, wenn diese auf dem Markt für einen günstigen Preis angeboten werden, beispielsweise dann, wenn der Gesamtverbrauch innerhalb des Versorgungsnetzes gering ist (z. B. in der Nacht) oder wenn das Angebot im Versorgungsnetz hoch ist (beispielsweise im Herbst).

Als Energiespeicher in den Hausanschlüssen können je nach Anforderungsprofil unterschiedliche Typen von Akkumulatoren bzw. Batterien oder auch andere Speicher für elektrische Energie verwendet werden. In der dargestellten Ausführungsform handelt es sich bei der Batterie um eine Batterie auf Basis von Lithium-Ionen-Technologie. Jedoch sind auch Bleiakkumulatoren denkbar, so wie sie herkömmlich zur Speicherung großer Energiemengen verwendet werden. Weiterhin eignen sich Akkumulatoren auf Lithium-Eisen-Phosphat-, Lithium-Nickel-Kobalt-, Lithium-Nitrat-, Lithium-, Nickel-, Kobalt- und Aluminiumoxyd sowie Lithium-Manganoxyd und Lithium-Titanoxyd-Technologie. Auch Ausführungsformen von Akkumulatoren mit Anoden aus nanostrukturiertem Material wie Lithiumtitanat sind ebenso denkbar.

Alternativ zu Akkumulatoren lassen sich Kondensatoren (engl. capacitors) mit hoher Kapazität wie z.B. High-Caps, Super-Caps oder Ultra-Caps, beispielsweise aus Kohlenstoffnanoröhren oder kapazitiven Polymeren verwenden. Weitere Energiespeicher umfassen beispielsweise supraleitende Spulen, supraleitende magnetische Energiespeicher (SMES), Schwungräder oder andere mechanische Systeme zur Wandlung in kinetische Energie, Wasserspeicherkraftwerke, Pumpspeicherkraftwerke zur Wandlung in potenzielle Energie, Wasserstoffspeicher aus Elementen zur Spaltung von Wasser in Wasserstoff und Sauerstoff in Verbindung mit Brennstoffzellen oder ganz allgemein Systeme zur Speicherung thermischer Energie, chemischer Energie, mechanischer oder elektrischer Energie. Die genannten Energiespeicher sind prinzipiell nicht nur zur Energiespeicherung auf Abnehmerseite sondern auch auf Kraftwerksseite oder in den einzelnen Netzwerknoten geeignet.

In einer Ausführungsform kann der Energiespeicher ein mobiler Energiespeicher sein, so wie er beispielsweise in elektrisch angetriebenen Kraftfahrzeugen vorhanden ist. Solche mobilen Energiespeicher werden zum Aufladen mit dem Versorgungsnetz verbunden und können insbesondere zur Energiespeicherung auf Seiten der Abnehmer verwendet werden. Dies bietet sich insbesondere deshalb an, weil die meisten Kraftfahrzeuge etwa 80 % ihrer Betriebslebenszeit ungenutzt und abgestellt sind.

Der Einsatz von Energiespeichern hebt die klare Abgrenzung zwischen Energieerzeugern und Abnehmern auf. Jede Einrichtung, welche über Energie, beispielsweise aus einem Energiespeicher, verfügt, kann diese grundsätzlich auch in das Netz einspeisen und so zum "Erzeuger" werden. Andererseits kann jeder Energiespeicher, beispielsweise auch ein einem Kraftwerk zugeordneter Energiespeicher, elektrische Energie aus dem Netz aufnehmen und wird so zum Abnehmer. Die in der vorliegenden Anmeldung verwendeten Begriffe Erzeuger und Abnehmer sind so im weiteren Sinne als Energiequelle bzw. Energiesenke in dem Versorgungsnetz zu verstehen.

In einer Ausführungsform weist ein Abnehmer ein Speichermanagement für den ihm zugeordneten Energiespeicher auf. Dabei kann das Speichermanagement einen oder mehrere charakteristische Füllstände definieren, die entweder automatisch oder von dem Betreiber des Abnehmers vorgegeben werden und die bestimmte Prozesse auslösen. Beispielsweise kann das Speichermanagement bei Erreichen eines bestimmten Füllstands eine Anfrage für die Lieferung einer bestimmten Energiemenge auslösen oder auch, z.B. bei drohendem Überlauf des Speichers, dem Netz eine bestimmte Energiemenge zur Einspeisung anbieten. Insbesondere bei Erreichen eines Minimalfüllstandes des Energiespeichers löst in einer Ausführungsform das Speichermanagement eine Energieanfrage aus, wobei dann beispielsweise Energie unabhängig vom angebotenen Preis bezogen wird. Das Speichermanagement kann auch die Leistungsprofile gemäß vorgebbaren Regeln definieren. Wenn jedem Netzwerkknoten oder SGR ein Speicher mit dem oben beschriebenen Speichermanagement zugeordnet ist, können zweckmäßigerweise dadurch die Leistungsprofile selbstorganisierend bestimmt werden.

In einer Ausführungsform bildet ein Netzwerkknoten des Versorgungsnetzes ein virtuelles Kraftwerk, wobei dieser Netzknoten mit einer Mehrzahl von Erzeugern verbunden ist und den Abnehmern als ein einziger Erzeuger erscheint.

Um ein besseres Verständnis der in der vorangegangenen Beschreibung verwendeten Begrifflichkeiten sowie der grundlegenden Elemente des erfindungsgemäßen Netzes zu ermöglichen, wird nachfolgend der Weg der in einem Kraftwerk erzeugten elektrischen Energie von dem Energieerzeuger bzw. Kraftwerk über einen einigen Netzwerkknoten zu einem einzigen Endabnehmer, beispielsweise einem Privathaushalt, beschrieben.

Es wird angenommen, dass in dem Privathaushalt an einem Wochentag Wäsche gewaschen werden soll und die verfügbare Waschmaschine zeitlich so programmierbar ist, dass sie ihren Betrieb zu einer Zeit aufnehmen kann, in der elektrische Energie im Überfluss erzeugt werden kann und daher die Preise günstig sind. Die Programmierung der Waschmaschine auf eine entsprechende Betriebszeit führt dazu, dass der Router des Abnehmers, welcher eine Datenverbindung zu der Waschmaschine aufweist, ein Datenpaket mit einer Anforderung für die Lieferung von elektrischer Energie mit einem Leistungsprofil zu einer bestimmten Zeit absendet. Das Datenpaket wird zunächst von dem Abnehmer an denjenigen Netzwerkknoten im Versorgungsnetz übertragen, mit dem der Abnehmer verbunden ist. Das übertragene Datenpaket enthält als Nutzlast Information über die erforderliche Energiemenge, das Leistungsprofil, die Zeitdauer sowie den Beginn des Waschvorgangs. Als Empfänger sind allgemein Kraftwerksbetreiber angegeben. Das vom Router des Abnehmers an den Netzwerkknoten im Versorgungsnetz übertragene Datenpaket wird an diesem ersten Netzwerkknoten so geroutet, dass es allen Kraftwerksbetreibern, die mit dem Netzwerkknoten verbunden sind, zur Verfügung gestellt wird. Die Kraftwerksbetreiber wiederum versenden in der Gegenrichtung Datenpakete, welche als Empfänger den anfragenden Abnehmer enthalten, und bieten diesem die zu liefernde Energiemenge zu ihren Konditionen an. Der Router des Abnehmers oder eine mit diesem verbundene Steuerung kann dann selbstständig oder mit manueller Unterstützung eines Benutzers das für den Verbraucher günstigste Angebot auswählen.

Zu der vereinbarten Zeit stellt der Energieerzeuger die vom Verbraucher angeforderte Energiemenge in Form eines Energiepaketes mit dem bestellten Leistungsprofil bereit. Um die Komplexität so gering wie möglich zu halten, betrachten wir in diesem Beispiel ein Niederspannungs-Gleichstromnetz, bei dem auch der Energieerzeuger tatsächlich die bereitgestellte und in das Versorgungsnetz eingespeiste Energiemenge mit dem bestellten Leistungsprofil einspeist.

Jedes in das Versorgungsnetz eingespeiste Energiepaket ist von einem Datenpaket begleitet, welches zumindest Informationen über den Abnehmer des Energiepakets trägt, an den dieses bereitgestellt werden soll. Dazu verfügt das Kraftwerk über einen Router, der sowohl die Energie in Form von Paketen in das Versorgungsnetz einspeist als auch Datenpakete, welche den Fluss der Energiepakete durch das Netz begleiten. Das Übertragen der den jeweiligen Energiepaketen zugeordneten Datenpakete erfolgt dabei zeitlich kurz vor dem Einspeisen des entsprechenden Energiepakets, um eine Energieübertragung zu ermöglichen, ohne dass an den einzelnen Netzwerkknoten eine Energiespeicherung vor dem Routing an das nächste Element im Netz erforderlich wäre. Das am Netzwerkknoten eintreffende Datenpaket wird anhand seiner Abnehmeradressierung an den entsprechenden Abnehmer weitergeleitet. Gleichzeitig schaltet der Router das Versorgungsnetz derart, dass das Energiepaket ebenfalls an denjenigen Abnehmer weitergeleitet wird, der im Datenpaket als Zieladresse vermerkt ist.

Insoweit die oben beschriebenen Ausführungsformen zumindest teilweise realisiert werden können, wobei eine softwaregesteuerte Verarbeitungseinrichtung verwendet wird, ist es offensichtlich, dass ein Computerprogramm, das solch eine Softwaresteuerung bereitstellt und ein Speichermedium, auf welchem solch ein Computerprogramm gespeichert ist, als Aspekte der Erfindung in Betracht zu ziehen sind.

Weitere Vorteile, Merkmale und Anwendungsmöglichkeiten der vorliegenden Erfindung werden anhand der folgenden Beschreibung von Ausführungsformen und der dazugehörigen Figuren deutlich.
- Figur 1: zeigt schematisch ein Versorgungsnetz gemäß einer Ausführungsform der vorliegenden Erfindung.
- Figur 2: zeigt schematisch ein Versorgungsnetz gemäß einer weiteren Ausführungsform der vorliegenden Erfindung.
- Figur 3: zeigt eine vereinfachte Ausführungsform des erfindungsgemäßen Versorgungsnetzes aus Figur 1.
- Figur 4: zeigt eine schematische Darstellung einer Ausführungsform eines mit einem erfindungsgemäßen Versorgungsnetz verbundenen Abnehmers.
- Figur 5: zeigt eine schematische Darstellung einer alternativen Ausführungsform eines mit einem erfindungsgemäßen Versorgungsnetz verbundenen Abnehmers.
- Figur 6: zeigt das Versorgungsnetz aus Figur 3 mit einer Mehrzahl von Netzwerkknoten.
- Figur 7: zeigt ein Schema des Ablaufs von Signalisierung und Energietransport in einem Versorgungsnetz gemäß Figur 6.
- Figur 8: zeigt einen Quellcode für eine beispielhafte Signalisierung über SIP für eine Leistungsanforderung in einem erfindungsgemäßen Versorgungsnetz.
- Figur 9: zeigt schematisch die Unterteilung des erfindungsgemäßen Versorgungsnetzes in Kontrollebene und Transportebene.
- Figur 10: zeigt schematisch den Aufbau einer Ausführungsform eines erfindungsgemäßen Netzwerkknotens.
- Figur 11: zeigt schematisch den zeitlichen Verlauf der erfindungsgemäßen Energiepakete.
- Figur 12: zeigt den Aufbau eines Leistungsventils für einen erfindungsgemäßen Router.
- Figur 13: zeigt ein Blockschaltbild einer erfindungsgemäßen Leistungssteuerung mit zwei Abnehmern.
- Figur 14: zeigt den Aufbau einer Stromverzweigung mit zwei Leistungsventilen in einem erfindungsgemäßen Router.
- Figur 15a: stellt das Ergebnis einer Simulation des Betriebs der Schaltung aus Figur 14 bei einem Lastwechsel für die Leistung im Zweig 2 dar.
- Figur 15b: stellt das Ergebnis einer Simulation des Betriebs der Schaltung aus Figur 14 bei einem Lastwechsel für die mittlere Spannung im Zweig 2 dar.
- Figur 15c: stellt das Ergebnis einer Simulation des Betriebs der Schaltung aus Figur 14 bei einem Lastwechsel für den zeitlichen Verlauf der modulierten Spannung im Zweig 2 dar.
- Figur 16: zeigt den Übergang zwischen Spannungsebenen in einem erfindungsgemäßen Versorgungsnetz.

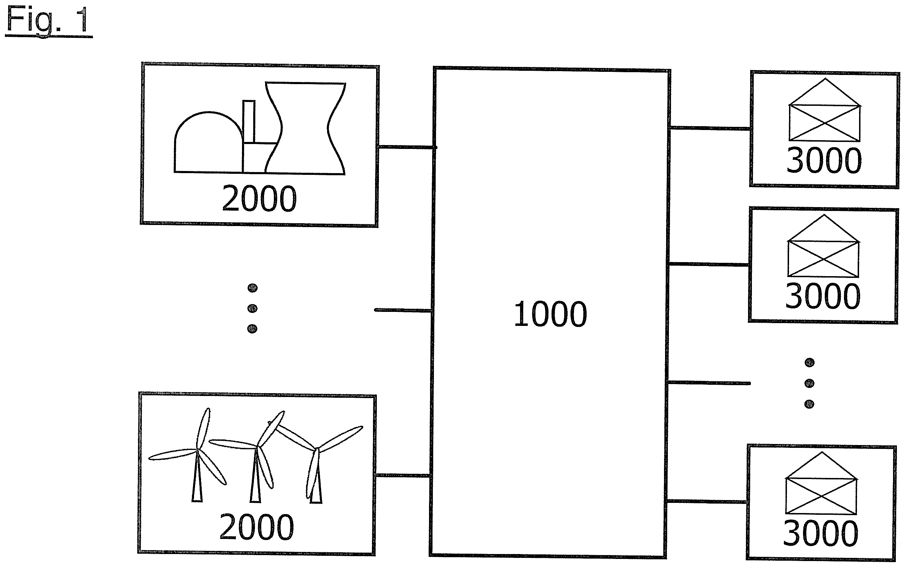

Figur 1 zeigt schematisch eine erste Ausführungsform eines elektrischen Versorgungsnetzes 1000, über das alle elektrischen Erzeuger 2000 und Abnehmer bzw. Verbraucher 3000 zusammengeschaltet sind. Ein solches intelligentes Netz eignet sich insbesondere für Versorgungsnetze, in die regenerative Energiequellen mit einer großen zeitlichen Schwankung in der bereitgestellten Energiemenge eingebunden sind. Das Netz 1000 ist nicht statisch verschaltet sondern erlaubt die Weiterleitung des elektrischen Stroms durch ein Routing von Energiepaketen an den einzelnen Netzwerkknoten.

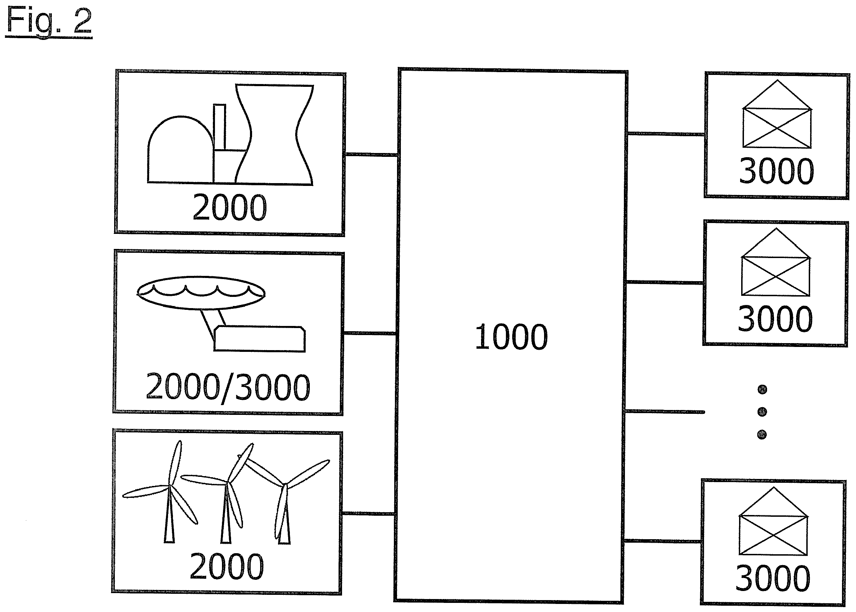

Beispielsweise kann bei starkem Wind eine Situation entstehen, in der die an das Versorgungsnetz angebundenen Windkraftanlagen mehr Strom produzieren, als momentan von den Verbrauchern 3000 abgenommen werden kann. Dazu verfügt das beispielhaft in Figur 2 dargestellte Versorgungsnetz über Speichereinrichtungen sowohl aufseiten der Erzeuger 2000 als auch aufseiten der Abnehmer bzw. Verbraucher 3000. Ein solcher Speicher kann ein Wasserspeicherkraftwerk sein oder auch eine Batterie bzw. ein Akkumulator eines elektrisch betriebenen Kraftfahrzeugs. Bei einem globalen Blick auf das Netzwerk verschwinden daher teilweise die Grenzen zwischen Erzeuger 2000 und Abnehmer 3000, da beispielsweise das Wasserspeicherkraftwerk und das Kraftfahrzeug sowohl Erzeuger als auch Verbraucher darstellen, d.h., zu bestimmten Zeiten sind sie Empfänger von Energie während sie zu anderen Zeiten Energie in das Netz 1000 einspeisen.

Um diesen hohen Anforderungen an ein Versorgungsnetz gerecht zu werden, verfügt das erfindungsgemäße Versorgungsnetz 1000 über eine Routingfunktion, die es ermöglicht Energiepakete auf individuellen Pfaden durch das Versorgungsnetz 1000 von einem Erzeuger 2000 an einen Abnehmer bzw. Verbraucher 3000 zu übertragen.

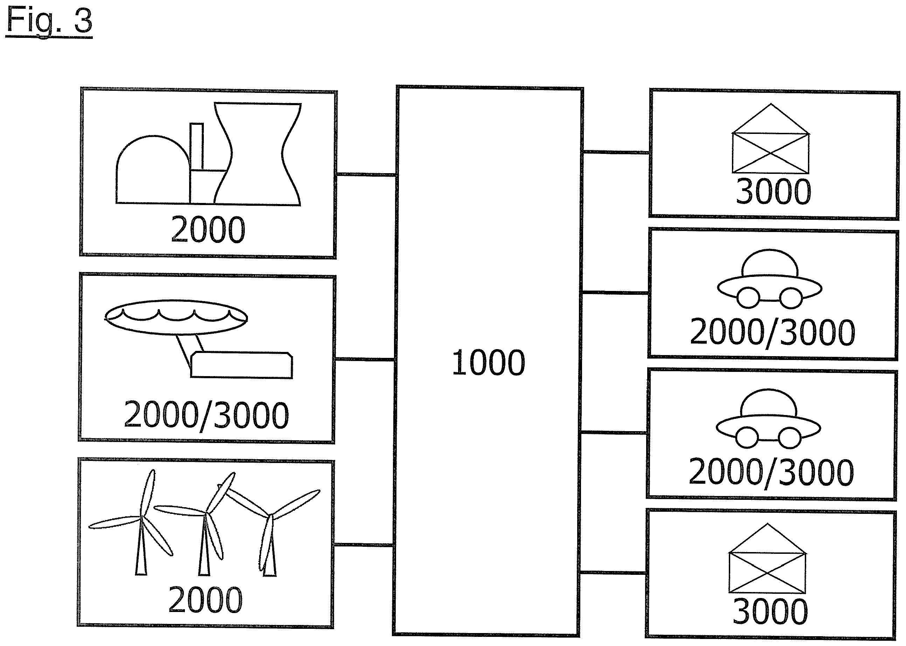

In Figur 3 ist beispielhaft ein einfach strukturiertes Versorgungsnetz mit einem einzigen zentralen Kraftwerk 2000 und vier Verbrauchern 3000 dargestellt. Dieses Beispiel des erfindungsgemäßen Versorgungsnetzes zeigt einführend, wie das Versorgungsnetz 1000 auf eine definierte Anforderungssituation reagiert. Dazu werden im Folgenden die einzelnen Komponenten, insbesondere des Verbrauchers 3000 und des Versorgungsnetzes 1000 in mehreren Ausführungsformen beschrieben.

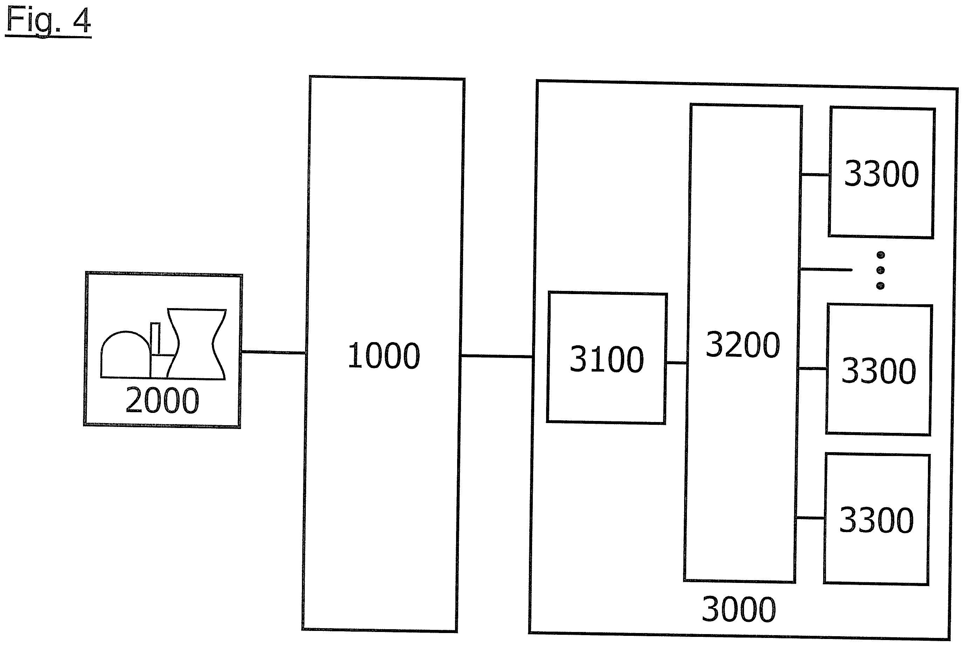

Figur 4 zeigt schematisch den Aufbau eines Verbrauchers 3000, welcher mit einem Versorgungsnetz 1000 verbunden ist. Ein Hausanschluss 3100 verbindet das Hausnetz 3200 mit dem dynamisch gerouteten Versorgungsnetz 1000 und über dieses wiederum mit dem Kraftwerk 2000. Um dynamisch auf die Anforderungssituation des Haushaltes 3000 reagieren zu können, muss der Hausanschluss zunächst eine Leistungsanforderung an das Versorgungsnetz 1000 übertragen.

Die technische Umsetzung einer solchen Leistungsanforderung sowie die weitere Übermittlung von Steuerinformationen in beiden Richtungen zwischen dem Verbraucher 3000 und dem Kraftwerk 2000 wird als Signalisierung bezeichnet, auf die weiter unten noch im Detail eingegangen wird. Mit dem Hausnetz 3200 sind einzelne Verbraucher 3300 verbunden, in dem vorliegenden Beispiel einzelne elektrisch betriebene Haushaltsgeräte, wie z. B. eine Waschmaschine, ein Küchenherd sowie Hausbeleuchtungen.

Der Hausanschluss 3100 weist eine ähnliche Ausgestaltung auf wie die Router eines jeden Netzwerkknotens des Versorgungsnetzes 1000. Zwar ist der Hausanschluss 3100 in der dargestellten einfachen Ausführungsform lediglich ein Abnehmer von elektrischer Energie, d.h., er muss nicht über eine Funktion für ein Routing von Energiepaketen an einen Abnehmer verfügen. In alternativen Ausführungsformen jedoch, in denen der Verbraucher 3000 über einen Energiespeicher verfügt, wobei der Inhalt des Energiespeichers auch anderen Verbrauchern zur Verfügung gestellt wird, verfügt der Hausanschluss 3100 auch über die Möglichkeit, Energie in das Versorgungsnetz 1000 einzuspeisen und damit über diejenige bidirektionale Funktionalität, wie sie auch die einzelnen Router der Netzwerkknoten des Netzes 1000 aufweisen.

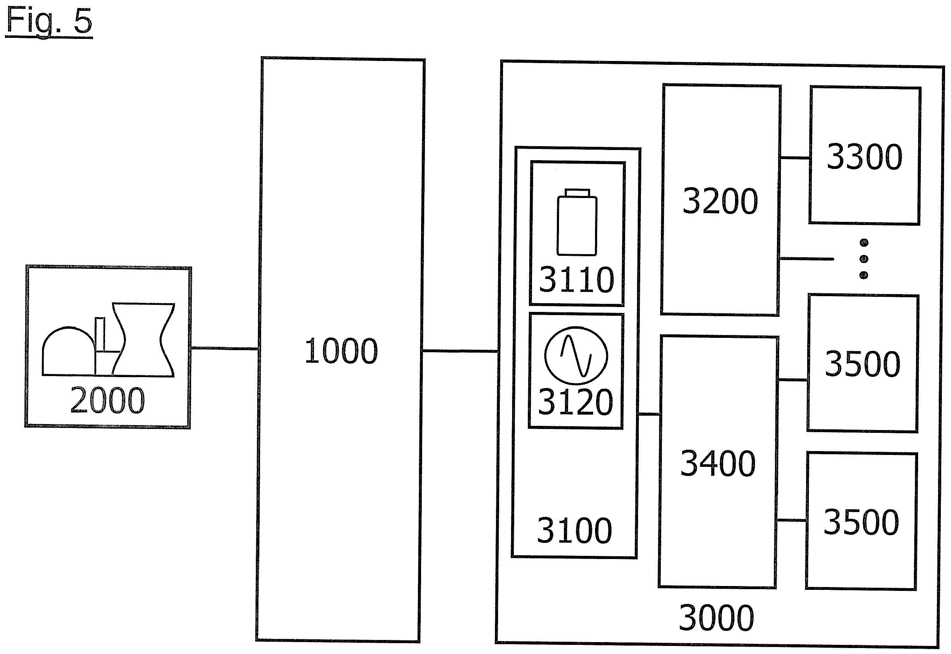

Figur 5 zeigt eine alternative Ausführungsform des Verbrauchers 3000. Der Hausanschluss 3100 verfügt über einen Energiespeicher, in der dargestellten Ausführungsform einem Akkumulator bzw. eine Batterie 3110. Diese dient als Puffer zur Speicherung von Energie, die über den konkreten Bedarf des Verbrauchers 3000 hinaus geliefert wurde.

Mit der Batterie 3110 bzw. dem Hausanschluss 3100 ist zum einen ein herkömmliches Hausnetz 3200 verbunden, welches wie zuvor beschrieben konventionelle Haushaltsgeräte 3300 mit gängigem Wechselstrom bei 220 Volt und 50 Hertz versorgt. Für die Versorgung des konventionellen Hausnetzes 3200 verfügt der Hausanschluss 3100 über einen Wechselrichter 3120, der die von der Batterie 3110 bereitgestellte Gleichspannung in eine Wechselspannung umformt und auf das entsprechende Spannungsniveau transformiert. Über das konventionelle Wechselspannungshausnetz 3200 hinaus versorgt der Hausanschluss 3100 auch ein sogenanntes Smart-Grid-Hausnetz 3400 mit entsprechenden Haushaltsgeräten 3500. Das Smart-Grid-Hausnetz 3400 selbst wiederum weist ähnlich dem Versorgungsnetz 1000 eine Möglichkeit zur Signalisierung und damit zur intelligenten Verteilung der elektrischen Energie im Haushalt auf. Dieses Smart-Grid-Hausnetz 3400 ermöglicht es beispielsweise, die von der Batterie 3110 zur Verfügung gestellte Energiemenge intelligent zu nutzen, indem beispielsweise der Betrieb einer Waschmaschine auf die Nachtstunden verlegt wird, wenn die anderen Energieverbraucher im Haushalt sich in Ruhe befinden.

In der in Figur 5 dargestellten Ausführungsform weist die Batterie 3110 ein Speichermanagement auf, welches es dem Benutzer, hier den Bewohnern des Hauses, ermöglicht, bestimmte Füllstandsmarken der Batterie 3110 zu definieren. Bei Erreichen diese Füllstandsmarken führt der Hausanschluss selbstständig Aktionen aus. So veranlasst das Erreichen eines Minimalfüllstandes des Speichers 3110 eine Anfrage für den Bezug einer bestimmten Energiemenge mit einem dazugehörigen Leistungsprofil, wobei diese Energiemenge zur Deckung des Grundbedarfs des Haushalts unabhängig vom angebotenen Preis für die Energiemenge bezogen wird. Das dem Energiepaket zugeordnete Leistungsprofil P(t) wird durch das Speichermanagement mit Hilfe vorgebbarer Regeln selbstständig bestimmt.

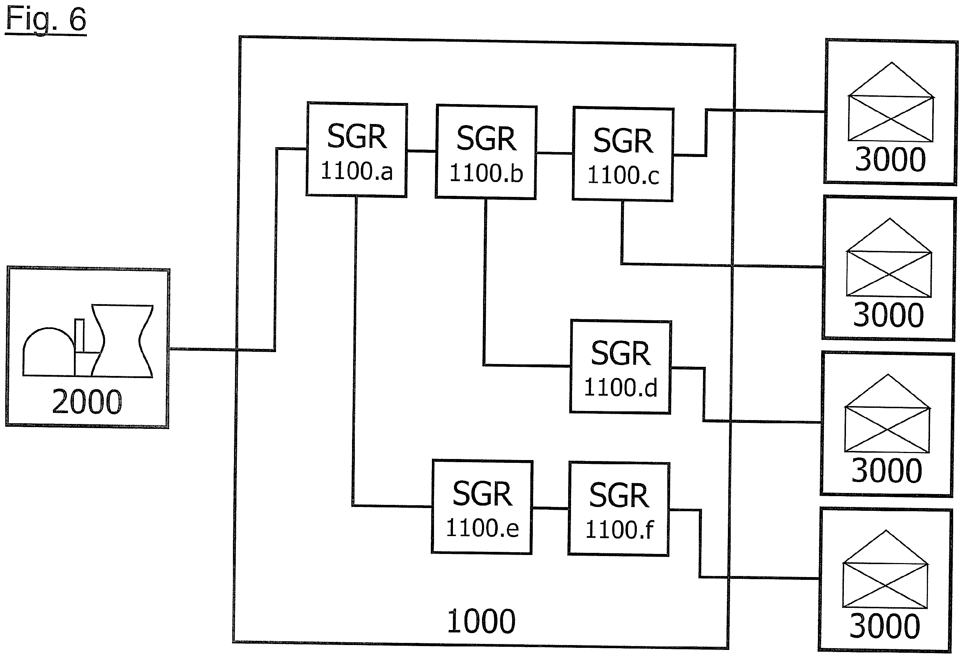

Figur 6 zeigt das Versorgungsnetz 1000 mit insgesamt sechs Netzwerkknoten 1100.a bis 1100.f, deren Funktion im Wesentlichen von einzelnen Smart-Grid-Routern (SGR) bereitgestellt wird. Die dargestellte Topologie des Netzes 1000 zeigt lediglich ein Beispiel, wobei es für die Funktionalität des Netzes 1000 nicht auf die konkrete Topologie aus Netzwerkknoten 1100 und Leitungen ankommt.

Betrachtet wird nun die Übertragung von Strom von einem Kraftwerk 2000 an einen einzigen Abnehmer 3000, in der Abbildung aus Figur 6, der obere Abnehmer. Zur Signalisierung überträgt der Hausanschluss 3100 des Abnehmers 3000, beispielsweise bei Erreichen des Minimalfüllstandes des Energiespeichers 3110, eine Leistungsanforderung an denjenigen Netzwerkknoten 1100.c, über den er an das Versorgungsnetz 1000 angeschlossen ist. Die Netzwerkknoten 1100.a, 1100.b und 1100.c bzw. deren SGRs routen diese Anforderung zu dem an das Netz 1000 angeschlossenen Kraftwerk 2000.

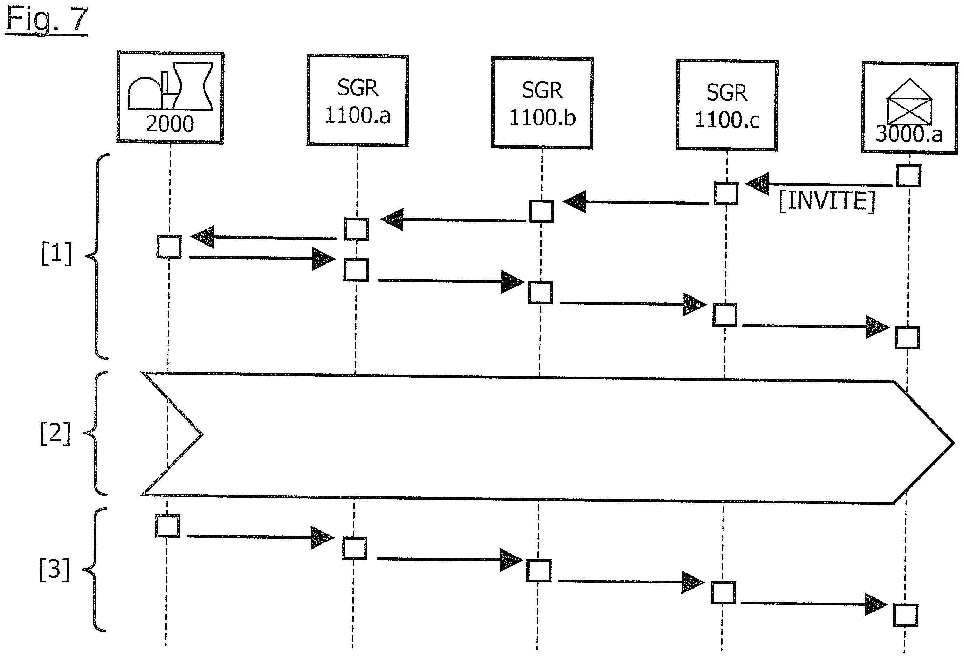

Dieser Signalisierungsvorgang ist in dem Sequenzdiagramm aus Figur 7 als Vorgang [1] gezeigt. In der dargestellten Ausführungsform wird der SGR eines jeden Netzwerkknotens 1100 über IP-(Internetprotokoll-) Adressen nach IPv4 oder Ipv6 und DNS- (Domain Name Service-) Hostnamen adressiert und die Signalisierungsinformation wird gemäß SIP (Session Initiation Protocol) ausgetauscht.

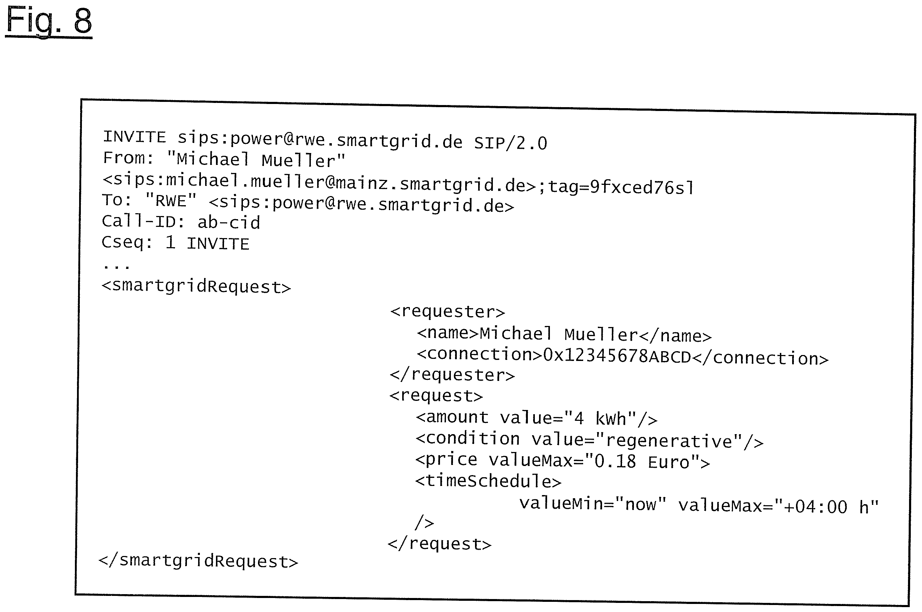

In Figur 8 ist beispielhaft eine Signalisierung einer Leistungsanforderung für 4 kWh aus regenerativen Energiequellen zu maximal 18 Cent pro kWh wiedergegeben. Die Signalisierung erfolgt über SIP mittels einer INVITE-Nachricht im XML-Format.

Wenn das Kraftwerk 2000 die angeforderte Leistung liefern kann, dann signalisiert es dies dem Haushalt über das Netz 1000. Dieser Rückweg der Signalisierung ist in Figur 7 ebenfalls mit [1] bezeichnet.

Daraufhin wird in dem Netz 1000 aus Netzwerkknoten 1100.a bis 1100.c mit SGRs dynamisch über ein Routingverfahren ein Pfad vom Kraftwerk 2000 über die einzelnen beteiligten SGRs zum Hausanschluss 3100 definiert, welcher für vier Stunden die Leistung von 1 kW liefert, indem die zugehörigen Energiepakete vom Kraftwerk 2000 zu dem Abnehmer 3000.a geroutet werden. Diese Energielieferung ist in Figur 7 mit Phase [2] bezeichnet.

In der in Figur 7 dargestellten Ausführungsform signalisiert das Kraftwerk 2000 in der Phase [3] weiterhin den Abschluss der Lieferung.

Die Funktion der SGRs in den Netzwerkknoten 1100 lässt sich besser verstehen, wenn man zunächst den Aufbau des Netzes 1000 näher betrachtet. Um sowohl eine Energieübertragung, d.h. die Übertragung von Energiepaketen, als auch eine Signalisierung, d.h. die Übertragung von Datenpaketen, und ein entsprechendes Routing der Pakete leisten zu können, weist das Netz 1000 eine Transport- und eine Kontrollebene auf.

In den in Figuren 1 bis 8 dargestellten Ausführungsformen weist die Transportebene zwei Kanäle auf, einen ersten zur Übertragung der mit der Steuerung und Kontrolle des Netzes verbundenen Daten und einen zweiten zur Übertragung elektrischer Leistung in Form von Energiepaketen zur Stromversorgung der Abnehmer 3000. Die beiden Kanäle der Transportschicht sind als getrennte Leitungen ausgeführt, die zwischen den Netzwerkknoten 1100 sowie zwischen den Netzwerkknoten und den Kraftwerken 2000 bzw. Abnehmern 3000 als Verbundleitungen ausgeführt sind. Um diese beiden Kanäle steuern und schalten zu können, verfügt jeder SGR eines Netzwerkknotens 1100 neben den erforderlichen Datennetzelementen wie Router und Switches über eine Leistungselektronik zur Übertragung der Energiepakete. Wenn im Folgenden von Leistungsventilen die Rede ist, so werden hierunter steuerbare Schalter verstanden, die es erlauben den Energiefluss aus einem Netzwerkknoten heraus zu steuern.

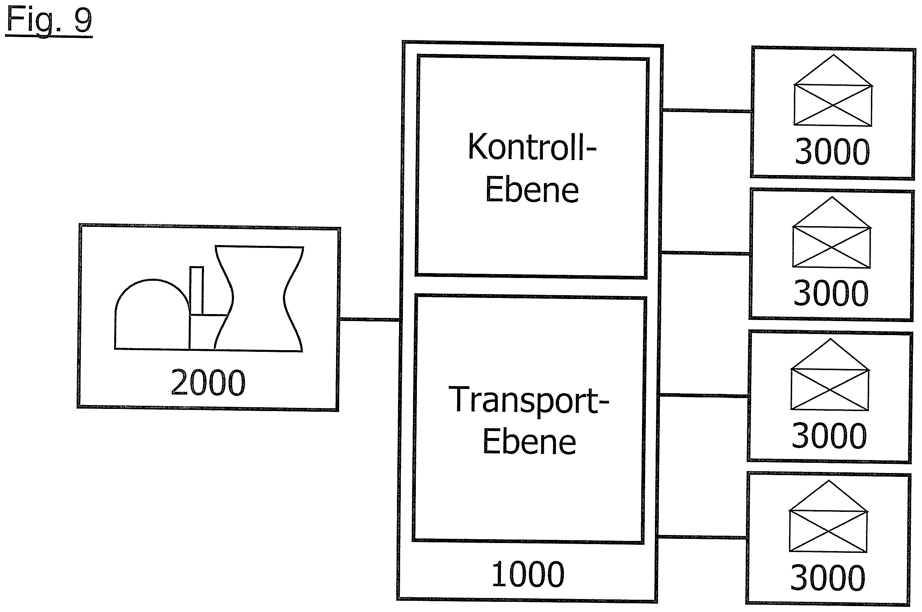

In den in den Figuren 1 bis 9 dargestellten Ausführungsformen erhält jeder Netzwerkknoten 1100 bzw. SGR zwei IPv6 Adressen. Eine Adresse für die IP-Kommunikation und eine zur Identifizierung des SGR im Netz 1000. Beide Adressen können jedoch auch identisch sein.

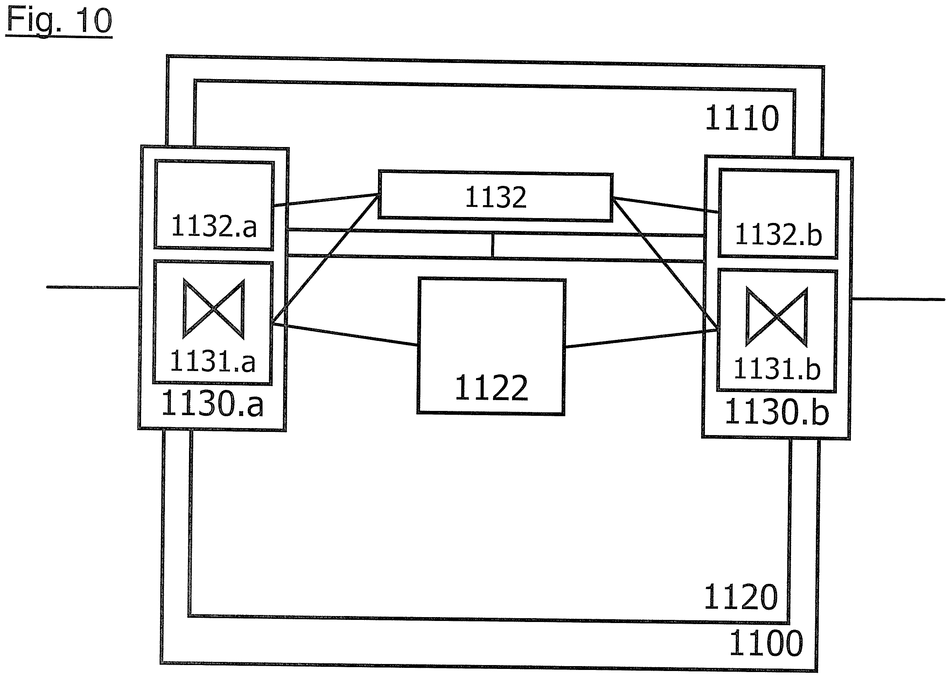

Figur 10 zeigt schematisch den Aufbau eines SGR in einem Netzwerkknoten 1100. Auch der Router des Knotens 1100 besteht aus einer Kontrollebene 1110 sowie einer Transportebene 1120. Die Kontrollebene 1110 übernimmt alle Steuer-, Regelungs-, Kontroll- und Kommunikationsfunktionen. Dazu zählt die Kommunikation der Router miteinander, insbesondere also auch die Kommunikation des Versorgungsnetzes 1000 im Ganzen mit den angeschlossenen Erzeugern 2000 und Verbrauchern 3000.

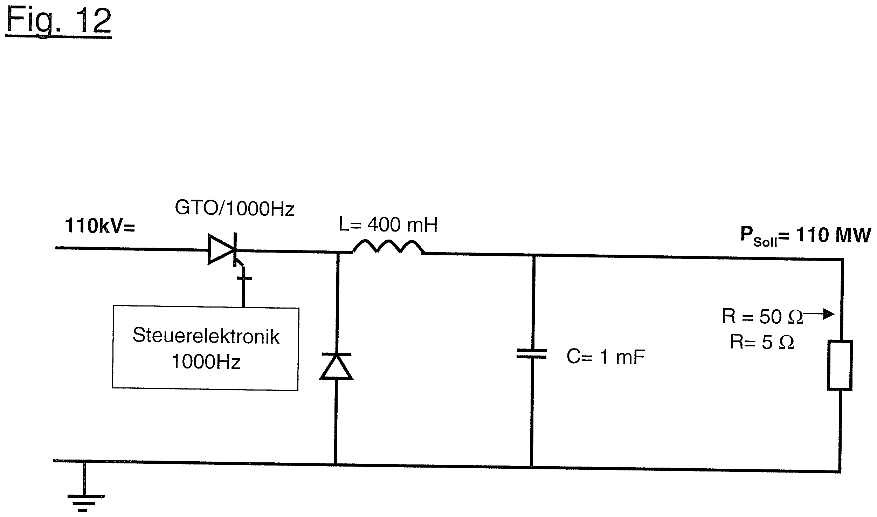

Auch die Schnittstellen 1130a, 1130b unterteilen sich in eine Kontroll- und eine Transportebene. In der Schnittstelle 1130 befindet sich auf der Kontrollebene eine Schnittstelle für die Datenkommunikation 1132. Diese ist an die Kontrolllogik 1132 auf der Kontrollebene angeschlossen sowie mit dem IP-Kommunikationsnetz verbunden. Auf der Transportebene ist die Schnittstelle 1131 an das Energiepaket-Transportnetz angeschlossen. Die an die Schnittstelle angeschlossene Transportleitung ist mit einem Leistungsventil 1131 verbunden, welches den Stromfluss regelt. Die Steuerelektronik (siehe Figur 12) des Leistungsventils 1131 ist mit der Kontrolllogik 1132 auf der Kontrollebene verbunden. Darüber hinaus ist das Leistungsventil 1131a über eine Stromschiene 1122 mit dem Leistungsventil 1131 b der Schnittstelle 1130b verbunden. Hat man mehrere Schnittstellen, so werden die zugeordneten Leistungsventile über eine Stromschiene 1122 verbunden. Die Steuerelektroniken aller Ventile werden an die Kontrolllogik 1132 angeschlossen, über die diese dann gesteuert werden. Die Kontrolllogik 1132 verfügt über eine IP-Routingfunktion sowie alle Funktionen, die für die Datenkommunikation notwendig sind. Vor allem verarbeitet die Kontrolllogik die eingehenden Datenpakete, verfügt über ein Routingverfahren für die Weg- bzw. Pfadbestimmung der Datenpakete und der Energiepakete, bestimmt die beteiligten Schnittstellen für den Transport der Energiepakete und regelt den Transport der Energiepakete über die Regelung der entsprechenden Leistungsventile. Darüber hinaus weist die Kontrolllogik 1132 eine Einrichtung zum Zusammenfassen von Energiepaketen zu Transportpaketen, die auf gleichen Leitungen transportiert werden müssen, sowie zum Erstellen und Übertragen der Transportinformationen, d.h. der Leistungsprofile und Zieladressen der in den Transportpakten zusammengefassten Energiepakte auf. Die Kontrolllogik 1132 verfügt auch über eine Einrichtung zum Zerlegen der Transportpakete mit Hilfe der parallel übertragenen Transportinformationen, dem sogenannten Transportauftrag, in die im Transportpaket enthaltenen ursprünglichen Energiepakete und zum weiteren Routing der ursprünglichen Energiepakete an deren jeweilige Zieladressen. Die Kontrolllogik 1132 verfügt auch über eine Einrichtung zur Reihenfolgenverarbeitung der ein- und ausgehenden Daten- und Energiepakete sowie für Störungs- und Überwachungsmanagement.

In der dargestellten Ausführungsform ist die Kontrollebene 1110 des Netzes 1000 auf IP-Technologie aus dem Stand der Technik aufgebaut. Die Kontrollebene 1110 des Routers realisiert den IP-Stack nach IPv4- oder IPv6 Adressierungsschema und darüber hinaus ein IP-Adressmanagement, den SIP-Stack mit zugehöriger Kontrolllogik, einen DNS-Client, Sicherheitsfunktionen sowie eine Flusskontrolle für die Steuerung der Schnittstellen 1130.a, 1130.b und Verteiler in der Transportebene.

Für die Bereitstellung eines Pfades von einem Erzeuger 2000 zu einem Abnehmer bzw. Verbraucher 3000 werden die für paketvermittelte Netzwerke bekannten Routingverfahren verwendet. In der einfachsten, hier dargestellten Ausführungsform werden Routingtabellen für das Routingverfahren verwendet. Dabei werden sogenannte Smart-Grid- (SG-) Adressen zur Identifizierung der Netzknoten 1100 verwendet. Diese SG-Adressen werden analog zu den Regeln für Internetadressen aufgebaut. Um eine ausreichende Anzahl von Adressen verfügbar zu machen, wird das IPv6-Adressierungsschema auch für die SG-Adressen verwendet. Die aus der IP-Technologie bekannten Routingverfahren können um Kostenfunktionen erweitert werden, die Durchleitungs- und Verlustkosten bei der Ermittlung von Lieferpfaden durch das Netz 1000 berücksichtigen. Hierdurch können beispielsweise lokale Energielieferanten bevorzugt werden.

Hat beispielsweise der Knoten, welcher mit dem Energielieferanten oder Kraftwerk 2000 verbunden ist, nachfolgend auch als Lieferknoten bezeichnet, mittels des Routingverfahrens den Pfad durch das Netz 1000 ermittelt, d.h. die Reihenfolge der beteiligten Netzwerkknoten 1100 bzw. SGRs festgelegt, so erstellt er eine Liste der beteiligten SG-Adressen. Diese Pfadliste wird dann mittels der Signalisierung, hier auf Basis des SIP-Protokolls, als Teil des Transportauftrages an die beteiligten SGRs übermittelt.

Die Transportebene 1120 des Netzwerkknotens leitet den Strom, d.h. die zu übertragenden Energiepakete, unter wohl definierten Regeln mit wohldefinierten Eigenschaften logisch parallel zu den Datenpaketen der Signalisierung durch das Netz 1000 aus miteinander verbundenen SGRs. Zentrale Funktionsgruppen sind dabei insbesondere die Schnittstellen 1130 zu den verbundenen nächsten SGRs.

In der dargestellten Ausführungsform sind die Kommunikationsschnittstellen 1132.a bzw. 1132.b als Ethernet Interface aufgebaut, so wie es nach Stand der Technik eine IP-Kommunikation in der physikalischen und der Data-Link-Schicht nach dem OSI-Schichtenmodell verwendet wird.

In dem dargestellten Beispiel handelt es sich bei dem Smart-Grid bzw. Netz 1000 um ein Gleichspannungsnetz. Für das Funktionieren der paketbasierten Energieübertragung wird im Folgenden davon ausgegangen, dass die bereitgestellten und übertragenen Energiepakete von den jeweiligen Empfängern vollständig abgenommen werden. Dabei wird im Folgenden eine Situation betrachtet, bei der der Netzwerkknoten 1100.a an einen Knoten 1100.b ein für den Knoten 1100.c bestimmtes Energiepaket übertragen soll. Jeder der beteiligten Knoten 1100.a, 1100.b und 1100.c weist einen SGR auf, der ein Routing sowohl der Datenpakete im IP-Netz als auch der Energiepakete im Versorgungsnetz ermöglicht.

Die Übertragung der Daten- und Energiepakete setzt eine netzweite absolute Zeit voraus. Dazu werden mit dem Verfahren des zeitsynchronisierten Ethernets alle beteiligten Elemente des Netzes 1000 zeitlich synchronisiert. Alternativ könnte die Synchronisation auch durch eine zusätzliche Signalisierung der Zeit realisiert werden, welche den Anfang und das Ende von Ereignissen in der Signalkette kommuniziert.

Im Folgenden wird die Funktionsweise der Bereitstellung von Energiepaketen am Ausgang eines Netzwerkknotens beschrieben. Jedes Energiepaket ist durch sein Leistungsprofil definiert. Das Leistungsprofil wiederum ist durch die Abfolge einzelner Energieframes F(i) definiert, sodass folgende Bedingungen gelten:
1. Für die Lieferzeit T gilt T = Endzeit - Anfangszeit.
2. Die Lieferzeit T wird in Zeitintervalle dt(i) unterteilt, sodass T = Summe (dt(i)) gilt.
3. Dabei ist t(i) die absolute Anfangszeit des Zeitintervalls dt(i).
4. Durch den Index i wird eine absolute Ordnungsrelation synchron zur absoluten Zeit realisiert. Mit i ist dann immer eindeutig die Anfangszeit des Frames F(i) verknüpft.
5. Jedem Zeitintervall wird eine Leistung P(i) zugeordnet, sodass für die Energie des Paketes E = Summe (P(i) x dt(i)) gilt. Das Intervall dt(i) mit Leistung P(i) wird als Energieframe bzw. elementares Energiepaket F(i) bezeichnet.

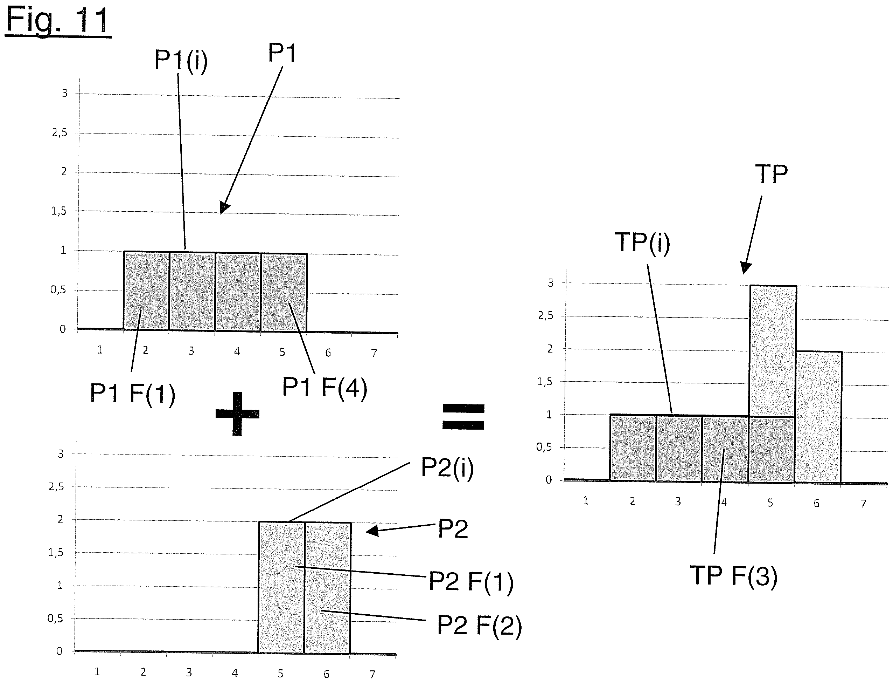

Ein Energiepaket ist in Figur 11 links oben als Paket P1 mit einem zugehörigen Leistungsprofil P1(i) dargestellt. Das Paket P1 soll von dem Knoten 1100.a an den Knoten 1100.b übertragen werden, d.h., das Energiepaket P1 muss über eine Leitung zwischen den Knoten 1100.a und 1100.b insbesondere zwischen der Ausgangsschnittstelle des Knotens 1100.a und der Eingangs-Schnittstelle des Knotens 1100.b übertragen werden. Soll im gleichen Zeitraum ein zweites Paket P2 mit einem zweiten Leistungsprofil P2(i), welches in Figur 11 links unten dargestellt ist, über dieselbe Leitung von dem Knoten 1100.a zu dem Knoten 1100.b übertragen werden, so muss über die Leitung ein Transportpaket TP (in Figur 11 rechts), mit dem zusammengesetzten Transportleistungsprofil TP(i) übertragen werden. Dabei ist das Transportleistungsprofil TP(i) für eine Leistungsübertragung zwischen zwei Schnittstellen durch die Summe der zum Transport anstehenden Leistungsprofile, in dem konkreten Beispiel P1(i), P2(i), definiert.

Durch die entsprechenden Transportaufträge, übermittelt durch die Signalisierung, welche von den Lieferknoten, d.h. die mit den Erzeugern verbundenen Knoten, initiiert werden, erhält die Kontrollebene des SGR die zum Transport anstehenden Pakete sowie die Zieladresse und die am Transport beteiligten Knotenadressen. Für die Verarbeitung dieser Transportaufträge verfügt die Kontrollebene über ein Queing- bzw. Warteschlangensystem. Die Kontrollebene des SGR kann entweder aus der Liste der am Transport beteiligten Knoten (eine solche Liste ist im Transportauftrag enthalten) oder mittels eines implementierten Routing-Algorhytmus den nächstfolgenden Router bzw. Netzwerkknoten bestimmen, an den er die Pakete übertragen soll. In einer Tabelle hat die Kontrollebene des SGR die Schnittstellen mit den angeschlossenen SGRs aufgelistet. Mit Hilfe dieser Liste ordnet die Kontrollebene den zu übertragenden Paketen die entsprechenden Schnittstellen zu. Dann werden für jede Schnittstelle die entsprechenden Transportprofile berechnet. Bei jedem Eingang eines neuen Transportauftrages für ein Energiepaket wird das entsprechende Transportprofil neu angepasst.

Das Paket P1 besteht aus vier Energieframes P1 F(1) bis P1 F(4). Das Paket P2 hingegen besteht lediglich aus zwei Energieframes P2 F(1) und P2 F(2) von gleicher Länge, jedoch mit unterschiedlichem Inhalt.

Betrachtet wird nun ein Zeitpunkt t(i), zu dem sich die Paketübertragung bei dem Frame TP F(i) befindet. Es steht nun als Nächstes die Lieferung des Frames TP F(i + 1) an. Zu dem Punkt i = 1 gehört der Zeitpunkt t + dt als Startzeitpunkt für den Frame TP F(i + 1).

Die Kontrollebene des SGR übergibt zum Zeitpunkt t den nachfolgenden Wert TP(i + 1) für die Lieferung des Frames TP F(i + 1) an die Leistungssteuerung der Transportebene über eine entsprechende Schnittstelle.

Die Transportebene verfügt über alle Schnittstellen zu den angeschlossenen Leitungen sowohl zur Daten- als auch zur Energieübertragung. Jede Schnittstelle verfügt über ein Leistungsventil und eine Schnittstelle zur Kontrollebene. Über diese Schnittstelle zur Kontrollebene erhalten die Leistungsventile die Leistungsgrößen und/oder Leistungsprofile TP(i) für den Transport der entsprechenden Energieframes.

In der dargestellten Ausführungsform erfolgt die Übertragung von Energiepaketen an allen Schnittstellen in einer festen Taktung, d.h., Energiepakete werden zu festen Zeitpunkten von den jeweiligen Schnittstellen aus übertragen.

Das Leistungsventil besteht aus einer Leistungselektronik (Power Electronics; PE), einer Steuerung für die Leistungselektronik und einer Leistungsmessung ausgangsseitig an der abgehenden Leitung zum nächsten Knoten sowie eine Schnittstelle zur Kontrollebene.

Die Steuerung erhält von der Kontrollebene jeweils für den nächsten Frame F(j) die Leistungsgröße TP(j), d.h. die maximal zu übertragende Leistung. Somit erhält die Steuerung der Leistungselektronik für den Zeitpunkt t(j) die Regelgröße TP(j) als Soll-Wert. Ab dem Zeitpunkt t = > t(j) sorgt die Steuerung der Leistungselektronik dafür, dass der Ist-Wert TPᵢₛₜ(t + dt) kleiner oder gleich dem Soll-Wert TP(j) ist. Dies gilt bis zum Zeitpunkt t = t(j + 1), von dem an die neue Regelgröße TP(j + 1) gilt. Alternativ kann auch der Ist-Wert kleiner als der Soll-Wert sein. Für jeden dem nächsten Takt zur Lieferung anstehenden Frame übergibt die Kontrollebene den Soll-Wert an die Steuerung/Regelung der Leistungselektronik. Auf diese Weise wird die Ausgangsleistung auf der mit der entsprechenden Schnittstelle verbundenen Leitung geregelt.

Bei konstanter Leistungsgröße TP(i) und gleichmäßiger Last führt das dazu, dass das Leistungsventil immer offen ist und es keine Schalt- bzw. Regelvorgänge gibt. Dann fungiert das Leistungsventil als Schalter, der die Leitung öffnet bzw. schließt.

Die Leistungsventile 1131.a und 1131.b aus Figur 10 werden im Wesentlichen von je einem GTO-Thyristor gebildet, um eine präzise Schaltung des Ausgangs der Schnittstelle 1130.a bzw. 1130.b zu ermöglichen. Ein Schaltbild der Leistungselektronik bzw. des Leistungsventils ist in Figur 12 dargestellt. Neben dem GTO-Thyristor weist die Leistungselektronik einen Tiefpaß aus einem Kondensator C und einer Spule L auf, um den Einschwingvorgang beim Schalten des GTO-Thyristors zu dämpfen und die Regelvorgänge zu glätten. Der auf der rechten Seite der Schaltung aus Figur 12 dargestellte Widerstand R symbolisiert die an der Schnittstelle anliegende Last.

Nach dieser allgemeinen Beschreibung der Funktionsweise des SGR und insbesondere des Leistungsventils in der Transportebene folgt nun die Betrachtung eines realistischen Beispiels für die Realisierung einer Leistungsbegrenzung in einem erfindungsgemäßen Netzwerk. Eine solche Leistungsbegrenzung verhindert, dass ein Abnehmer zu einem bestimmten Zeitpunkt mehr Leistung aus dem Netz ziehen kann, als er angefordert bzw. bestellt hat.

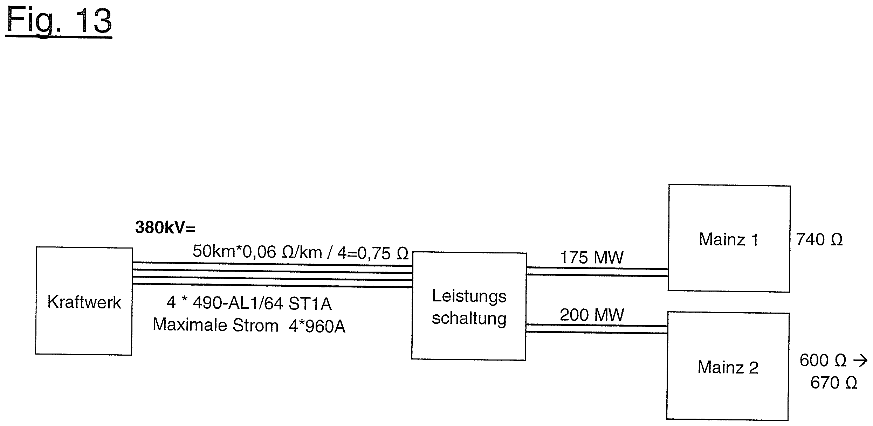

Ein Knoten A, hier ein Kraftwerk, beliefert einen Knoten B, hier ein Leistungsschalter mit einem Paket mit konstanter Leistung. Der Knoten B wiederum beliefert einen Knoten C (Mainz 1) mit einem Paket mit einem konstanten Leistungsprofil von 175 MW und einen Knoten D (Mainz 2) mit einem Paket mit konstantem Profil von 200 MW. Figur 13 zeigt das skizzierte Netz in einer schematischen Darstellung mit einer 380 kV-Leitung vom Kraftwerk zum Leistungsschalter und der Bereitstellung der entsprechenden Leistungen an die Stadtteile Mainz 1 und Mainz 2.

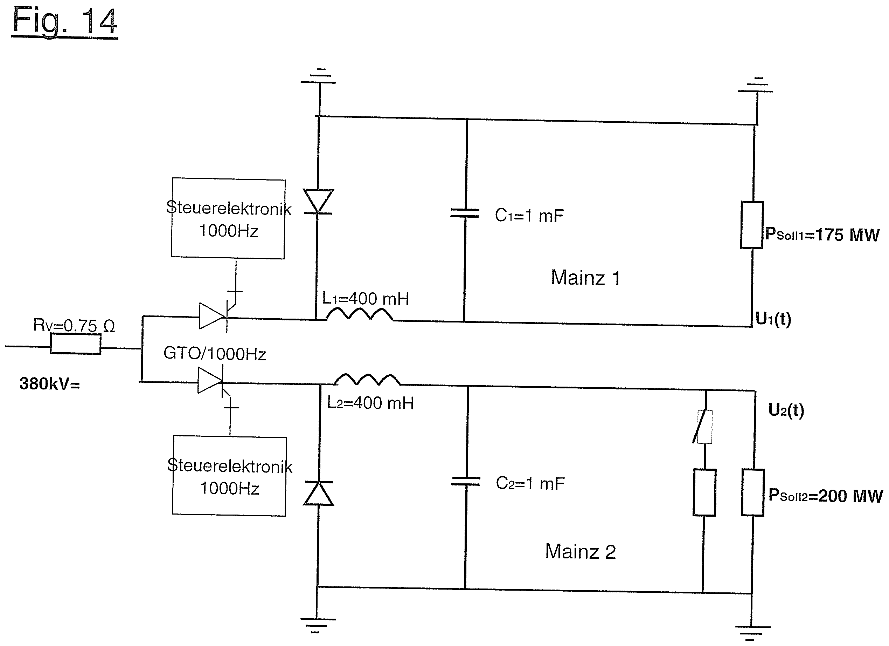

Die Leistungselektronik des Knotens B ist in Figur 14 dargestellt, wobei die gezeigte Leistungselektronik zwei GTO-Thyristoren bzw. zwei Leistungsventile aufweist, um ein Routing, d.h. eine Leistungsaufteilung des am Knoten B eingehenden Energiepakets auf die Pakete, welche den Knoten C und D, d.h. den Stadtteilen Mainz 1 und Mainz 2 bereitgestellt werden, zu ermöglichen. Im zweiten (unteren) Zweig Mainz 2 ist ein Schalter vorgesehen, der es ermöglicht eine zusätzliche Last zuzuschalten.

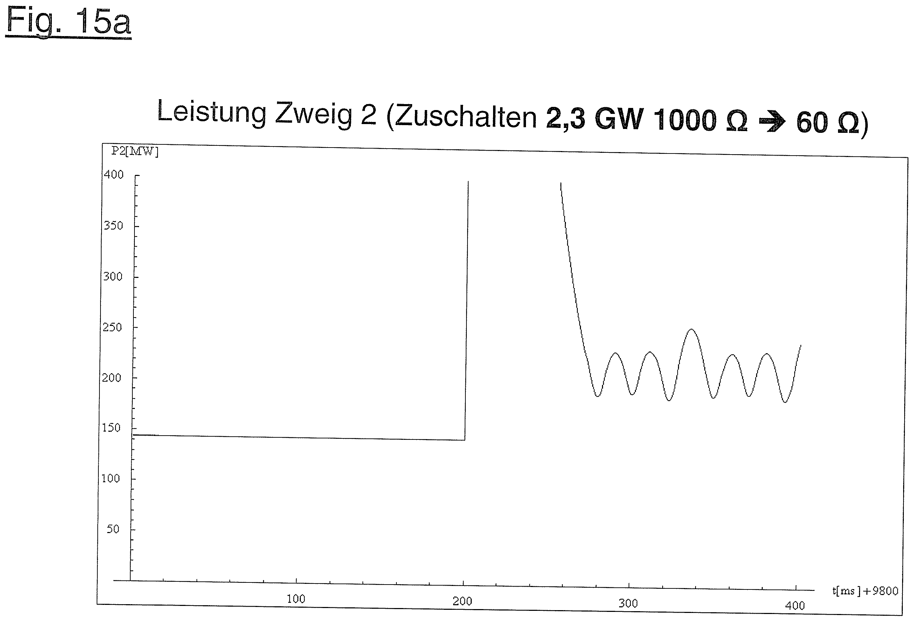

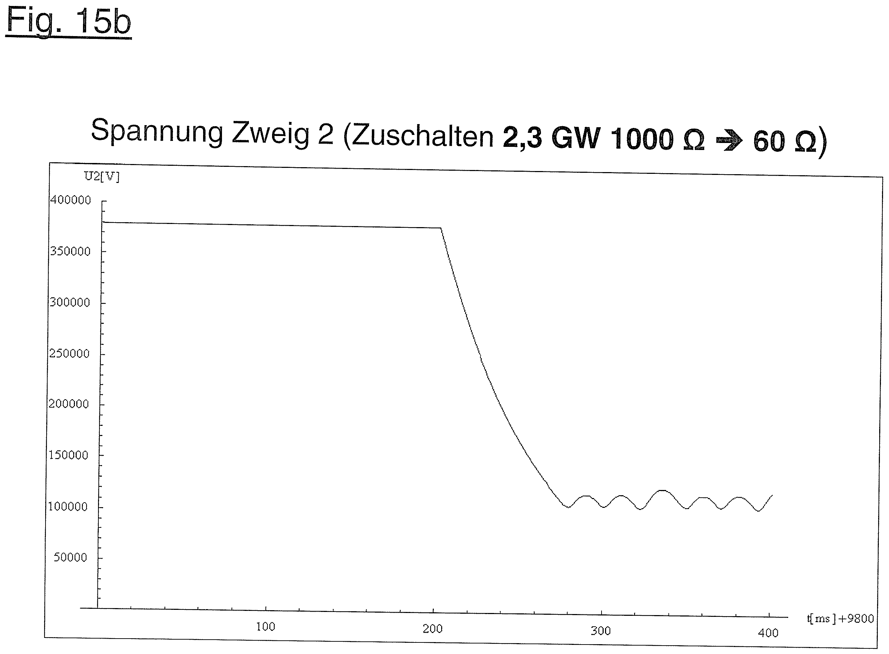

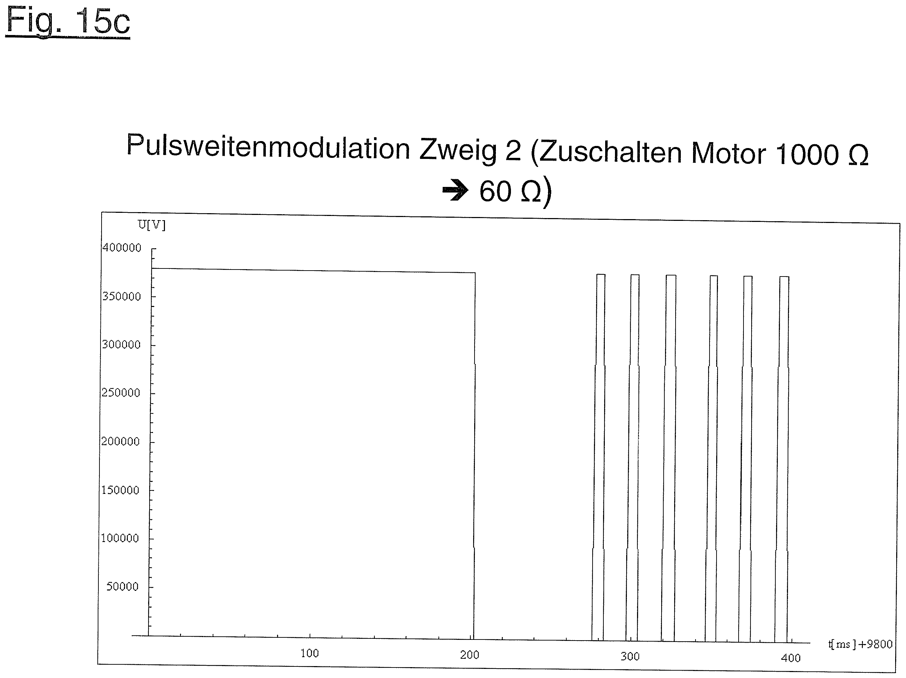

Figuren 15a bis 15c zeigen die Ergebnisse einer numerischen Simulation für einen Lastwechsel, bei dem im Zweig Mainz 2 bei t= 200 ms eine Last mit einer Leistungsaufnahme von 2,3 GW zugeschaltet wird, wobei die Steuerung der Schaltung aus Figur 14 eine Leistungsbegrenzung bereitstellt. Während Figur 15a das Verhalten der Leistung beim Zuschalten der Last im Zweig Mainz 2 zeigt, stellt Figur 15b das Verhalten der Spannung am Kondensator C2 beim Zuschalten der Last dar und Figur 15c zeigt die Modulation der Spannung am Leistungsventil des Zweigs Mainz 2, welche zu der effektiven Spannung aus Figur 15b führt.

Zunächst ist der GTO des Zweiges Mainz 2 permanent geöffnet, da weniger Leistung entnommen wird, als angefordert. Beim Zuschalten der zusätzlichen Last bei t= 200 ms wird die Sollleistung von 200 MW überschritten und die Steuerelektronik sperrt den GTO im Zweig Mainz 2, um die dem Netz entnehmbare Leistung auf die Sollleistung zu begrenzen. Daraufhin sinkt die in Figur 15b dargestellte Spannung am Kondensator C2 ebenso wie die in Figur 15a dargestellte entnehmbare Leistung, die sich in etwa bei der Sollleistung von 200 MW einpendelt. Wie aus Figur 15c ersichtlich arbeitet die Regelung in der dargestellten Ausführungsform mit einer konstanten Pulsweite der Spannungspulse und moduliert deren Häufigkeit, um die für die Begrenzung der entnehmbaren Leistung erforderliche mittlere Spannung zu erzielen.

Das derzeitige Versorgungsnetz in Deutschland beispielsweise realisiert vier Spannungsebenen, typischerweise Höchstspannung bei 220 kV oder 380 kV, Hochspannung bei 110 kV, Mittelspannung von 1 kV bis 50 kV bzw. 60 kV und Niederspannung bei 230 V oder 400 V. Das geroutete Netz 1000 kann in einer Ausführungsform eine solche Aufteilung in Spannungsebenen ebenfalls realisieren. Dabei dienen die in Deutschland bestehenden Spannungsebenen lediglich als Beispiel, alle anderen Aufteilungen in Spannungsebenen lassen sich ebenfalls auf das erfindungsgemäße Smart-Grid abbilden.

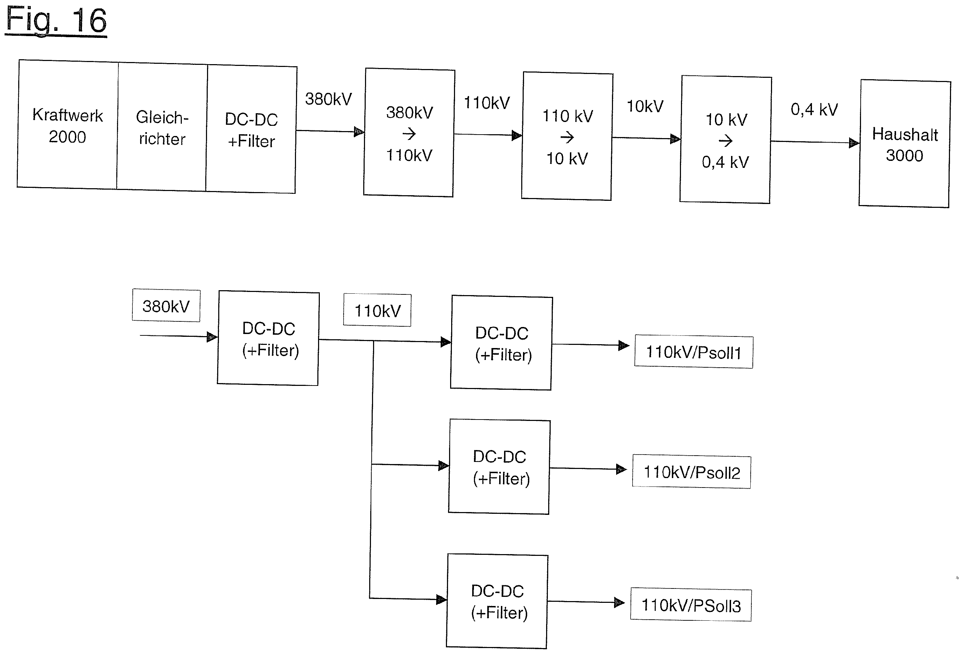

Die obere Abbildung aus Figur 16 zeigt beispielhaft die Realisierung eines Gleichspannungsnetzes mit 4 Spannungsebenen. Dabei ist das Kraftwerk 2000 ein herkömmliches Kraftwerk zur Erzeugung von Wechselspannung. Dieses verfügt jedoch über einen Gleichrichter, um eine Gleichspannung in das Versorgungsnetz einzuspeisen. Auf der Seite des Abnehmers bzw. Haushalts 3000 kann entweder die zur Verfügung gestellte Gleichspannung direkt genutzt werden oder mit Hilfe eines Wechselrichters wird hausseitig eine herkömmliche Haushaltswechselspannung erzeugt. Da beim Übergang von einer höheren auf eine niedrigere Spannungsebene typischerweise auch die Vermaschung des Netzes zunimmt, muss die in einer Spannungsebene eingehende Leistung wie in der unteren Abbildung aus Figur 16 gezeigt durch die Verwendung von Tiefsatzstellern typischerweise noch auf mehrere angeschlossene Netze verteilt werden.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1000: Versorgungsnetz
- 1100.a - 1100.f: Netzwerkknoten
- 1110: Kontrollebene
- 1120: Transportebene
- 1122: interner Verteiler in der Transportebene
- 1130.a, 1130.b: Schnittstelle
- 1131.a, 1131.b: Leistungsventil in der Transportebene
- 1132: IP-Router in der Kontrollebene
- 1132.a, 1132.b: Funktionsgruppe der Schnittstelle in der Kontrollebene
- 2000: Kraftwerk
- 3000: Abnehmer
- 3100: Hausanschluss
- 3200: Wechselspannungshausnetz
- 3300: Wechselspannungsverbraucher/-elektrogeräte
- 3400: intelligentes Gleichspannungshausnetz
- 3500: Gleichspannungsverbraucher/-elektrogeräte

## Patentansprüche

1. Verfahren zur Übertragung elektrischer Energie über ein elektrisches Versorgungsnetz (1000) mit mindestens einem Erzeuger (2000) für elektrische Energie, mindestens einem Netzwerkknoten (1100, 1100.a - 1100.f) und mindestens einem Abnehmer (3000),
wobei die elektrische Energie in Form mindestens eines Energiepakets von dem Erzeuger (2000) über den Netzwerkknoten zu dem Abnehmer (3000) übertragen wird, Festlegen eines Leistungsprofils TP(t) für das zu übertragende Energiepaket, wobei das Leistungsprofil TP(t) festlegt, welche Leistung für das Energiepaket zu einem Zeitpunkt t maximal übertragen wird,
wobei dem Energiepaket ein Datenpaket zugeordnet ist, das so mit dem Energiepaket übertragen wird, dass beim Eintreffen an einem Netzwerkknoten das Datenpaket zeitlich vor dem Energiepaket eintrifft,
wobei das Leistungsprofil TP(t) als Information mit dem Datenpaket übertragen wird,
wobei das Energiepaket an dem Netzwerkknoten (1100.a - 1100.f) autonom und selbstorganisiert von dem Erzeuger (2000) zu dem Abnehmer (3000) geroutet wird und wobei das Routing folgende Schritte aufweist:
Empfangen des Datenpakets,
Empfangen des dem Datenpaket zugeordneten Energiepakets,
Bestimmen eines Empfängers aus der in dem Datenpaket enthaltenen Information,
Auswählen einer Leitung für die Übertragung des Energiepakets mit Hilfe der in dem Datenpaket enthaltenen Information,
Übertragen des Datenpakets an den zuvor bestimmten Empfänger und
Freischalten der ausgewählten Leitung mit Hilfe eines steuerbaren Schalters, und
Übertragen des dem Datenpaket zugeordneten Energiepakets mit dem festgelegten Leistungsprofil TP(t), das durch die Spannung U(t), den elektrischen Strom I(t) und die zeitliche Dauer T des Pakets definiert ist, an den gleichen zuvor bestimmten Empfänger durch Regeln der zu einem Zeitpunkt t übertragenen Leistung anhand des Leistungsprofils TP(t) des zu übertragenden Energiepakets mit Hilfe des steuerbaren Schalters.

2. Verfahren nach Anspruch 1, **dadurch gekennzeichnet, dass** das Datenpaket und das Energiepaket über die gleiche elektrische Leitung übertragen werden und/oder dass das Datenpaket über ein Datennetzwerk übertragen wird und das Energiepaket über ein Versorgungsnetz übertragen wird, wobei das Datennetzwerk und das Versorgungsnetz physikalisch voneinander getrennt sind.

3. Verfahren nach einem der Ansprüche 1 oder 2, **dadurch gekennzeichnet, dass** das Versorgungsnetz und das Datennetzwerk zusammen ein logisches Netzwerk bilden, das eine Transportebene und eine Signalisierungs- und Kontrollebene (SCP) aufweist.

4. Verfahren nach einem der Ansprüche 1 bis 3, **dadurch gekennzeichnet, dass** es weiterhin den Schritt umfasst:
Festlegen der zeitlichen Dauer T des zu übertragenden Energiepakets, wobei die zeitliche Dauer T des Energiepakets vorzugsweise ein ganzzahliges Vielfaches der zeitlichen Dauer dt eines elementaren Energieframes ist.

5. Verfahren nach einem der Ansprüche 1 bis 4, **dadurch gekennzeichnet, dass** es weiterhin die Schritte umfasst:
Zusammenfassen einer Mehrzahl von empfangenen Energiepakten zu einem zu übertragenden Energiepaket, wobei jedes der empfangenen Energiepakete ein Leistungsprofil P(t) aufweist, welches festlegt, welche maximale Leistung das Energiepaket zu einem Zeitpunkt t bereitstellt,
wobei beim Zusammenfassen die Leistungsprofile P(t) der empfangenen Energiepakete zu einem Leistungsprofil TP(t) des zu übertragenden Energiepakets addiert werden, und
Übertragen der Zieladressen und der Leistungsprofile P(t) der empfangenen Energiepakete in einem dem zu übertragenden Energiepaket zugeordneten Datenpaket an den Empfänger.

6. Verfahren nach einem der Ansprüche 1 bis 5, **dadurch gekennzeichnet, dass** es weiterhin die Schritte umfasst:
Zerlegen eines empfangenen Energiepakets in eine Mehrzahl von zu übertragenden Energiepaketen, wobei das dem empfangenen Energiepaket zugeordnete Datenpaket Informationen über die Zieladressen und die Leistungsprofile der zu übertragenden Energiepakete enthält,
Übertragen der zu übertragenden Energiepakete mit den ihnen zugeordneten Leistungsprofilen an jeweils einen Empfänger, und
Übertragen der den zu übertragenden Energiepaketen zugeordneten Datenpakete an die gleichen Empfänger wie die Energiepakete.

7. Verfahren nach einem der Ansprüche 1 bis 6, **dadurch gekennzeichnet, dass** es über ein Speichermanagement für einen einem Abnehmer zugeordneten Energiespeicher aufweist, wobei das Speichermanagement mindestens eine Füllstandsmarke des Energiespeichers definiert und dann, wenn der Füllstand des Speichers die Füllstandsmarke überschreitet oder unterschreitet eine Anfrage nach Energie oder ein Angebot für Energie an das Netz überträgt.

8. Verfahren nach einem der Ansprüche 1 bis 7, **dadurch gekennzeichnet**, das es eine Leistungsbegrenzung aufweist, welche die von einem Abnehmer aus dem Netz entnehmbare Leistung begrenzt.

9. Computerprogramm mit Programmcode zur Durchführung eines Verfahrens nach einem der Ansprüche 1 bis 8, wobei das Computerprogramm vorzugsweise auf einem maschinenlesbaren Datenträger gespeichert ist und/oder wobei das Computerprogramm vorzugsweise auf ein Computersystem geladen ist.

10. Elektrisches Versorgungsnetz (1000) mit
mindestens einem Erzeuger (2000) für elektrische Energie,
mindestens einem Netzwerkknoten (1100, 1100.a - 11 00.f) und
mindestens einem Abnehmer (3000),
wobei der Erzeuger (2000), der Netzwerkknoten (1100, 1100.a - 1100.f) und der Abnehmer (3000) so eingerichtet und so miteinander verbunden sind, dass im Betrieb elektrische Energie in Form mindestens eines Energiepakets mit einer vorgegebenen Energiemenge von dem Erzeuger (2000) über den Netzwerkknoten (1100, 1100.a - 1100.f) zu dem Abnehmer (3000) übertragbar ist,
wobei ein Leistungsprofil TP(t) für dazu übertragende Energiepaket festlegt, welche Leistung für das Energiepaket zu einem Zeitpunkt t maximal übertragen wird,
wobei der Erzeuger (2000), der Netzwerkknoten (1100, 1100.a - 1100.f) und der Abnehmer (3000) so eingerichtet und so miteinander verbunden sind, dass im Betrieb ein dem Energiepaket zugeordnetes Datenpaket von dem Erzeuger (2000) über den Netzwerkknoten (1100, 1100.a - 11 00.f) zu dem Abnehmer (3000) übertragbar ist, wobei das Datenpaket so übertragen wird, dass beim Eintreffen an einem Netzwerkknoten das Datenpaket zeitlich vor dem Energiepaket eintrifft,
wobei das Leistungsprofil TP(t) als Information in dem Datenpaket übertragen wird und
wobei der Netzwerkknoten (1100, 1100.a - 1100.f) zum gerichteten Übertragen des Energiepakets unter Verwendung des Datenpakets eine Einrichtung zum autonomen und selbstorganisierten Routen aufweist mit
einer Empfangseinrichtung (1132.a) zum Empfangen eines Datenpakets,
einer Empfangseinrichtung (1131.a, 1131.b) zum Empfangen eines dem Datenpaket zugeordneten Energiepakets,
einer Einrichtung (1132) zum Bestimmen eines Empfängers aus der in dem Datenpaket enthaltenen Information,
einer Einrichtung zum Auswählen einer Leitung für die Übertragung des Energiepakets mit Hilfe der in dem Datenpaket enthaltenen Information,
einer Einrichtung (1132.b) zum Übertragen des Datenpakets an den zuvor bestimmten Empfänger,
wobei die Einrichtung (1132.b) zum Übertragen des Datenpakets mit der Einrichtung (1132) zum Bestimmen des Empfängers verbunden ist,
einer Einrichtung (1131.b) zum Übertragen des dem Datenpaket zugeordneten Energiepakets mit dem Leistungsprofil TP(t), das durch die Spannung U(t), den elektrischen Strom I(t) und die zeitliche Dauer T des Pakets definiert ist,
wobei die Einrichtung (1131.b) zum Übertragen des Energiepakets mit der Einrichtung (1132) zum Bestimmen des Empfängers verbunden ist,
wobei der Netzwerkknoten (1100, 1100.a - 1100.f) so eingerichtet ist, dass er im Betrieb das Datenpaket und das Energiepaket an den gleichen Empfänger überträgt und
wobei die Einrichtung zum Übertragen des Energiepakets mindestens einen steuerbaren Schalter aufweist, welcher so mit der Einrichtung zum Übertragen des Datenpakets verbunden ist, dass er von dieser ansteuerbar ist zum Regeln der zu einem Zeitpunkt t übertragenen Leistung anhand des Leistungsprofils TP(t) des zu übertragenden Energiepakets .

11. Elektrisches Versorgungsnetz nach Anspruch 10, **dadurch gekennzeichnet, dass** der Erzeuger und/oder der Netzwerknoten und/oder der Abnehmer einen Speicher für elektrische Energie aufweisen.

12. Elektrisches Versorgungsnetz nach Anspruch 10, **dadurch gekennzeichnet, dass** der Netzwerkknoten mit einem ersten physikalischen Netzwerk zur Übertragung des Energiepakets und mit einem zweiten physikalischen Netzwerk zur Übertragung des Datenpakets verbunden ist.

13. Elektrisches Versorgungsnetz nach Anspruch 10 oder 12, **dadurch gekennzeichnet, dass** der Netzwerkknoten eine Transportebene und eine Signalisierungs- und Kontrollebene (SCP) aufweist.

## Claims

1. A method for transmitting electrical energy via an electricity grid (1000) comprising at least one generator (2000) for electrical energy, at least one network node (1100, 1100.a - 1100.f) and at least one consumer (3000), wherein the electrical energy is transmitted in the form of at least one energy packet from the generator (2000), via the network node to the consumer (3000),
determining a power profile TP(t) for the energy packet to be transmitted, the power profile TP(t) determining which power is to be maximally transmitted for the energy packet at a moment in time t,
wherein a data packet is associated with the energy packet, which is transmitted with the energy packet in such a way that when arriving at a network node the data packet arrives before the energy packet,
wherein the power profile TP(t) is transmitted as information together with the data packet,
wherein the energy packet is routed autonomously and self-organised from the generator (2000) to the consumer (3000) via the network node (1100.a - 1100.f) and wherein the routing comprises the following steps:
receiving the data packet,
receiving the energy packet associated with the data packet,
determining a receiver from the information contained in the data packet,
selecting a line for the transmission of the energy packet with the aid of the information contained in the data packet,
transmitting the data packet to the previously determined receiver, and
activating the selected line with the aid of a controllable switch, and
transmitting the energy packet with the determined power profile TP(t), which is defined by the voltage U(t), the electric current I(t) and the duration T of the packet, associated with the data packet to the same previously determined receiver by determining the power transmitted at a moment in time t on the basis of the power profile TP(t) of the energy packet to be transmitted with the aid of the controllable switch.

2. The method according to claim 1, **characterised in that** the data packet and the energy packet are transmitted via the same electrical line and/or that the data packet is transmitted via a data network and the energy packet is transmitted via a grid, the data network and the grid being physically separate from one another.

3. The method according to either claim 1 or 2, **characterised in that** the grid and the data network together form a logical network which comprises a transport plane and a signalling and control plane (SCP).

4. The method according to any one of claims 1 to 3, **characterised in that** it further comprises the step:
determining the duration T of the energy packet to be transmitted, the duration T of the energy packet preferably being an integral multiple of the duration dt of a basic energy frame.

5. The method according to any one of claims 1 to 4, **characterised in that** it further comprises the steps:
combining a plurality of received energy packets to form an energy packet to be transmitted, each of the received energy packets comprising a power profile P(t) which determines which maximum power the energy packet provides at a moment in time t,
during this combining process, the power profiles P(t) of the received energy packets being added to a power profile TP(t) of the energy packet to be transmitted, and
transmitting to the receiver the target addresses and the power profiles P(t) of the received energy packets in a data packet associated with the energy packet to be transmitted.

6. The method according to any one of claims 1 to 5, **characterised in that** it further comprises the steps:
breaking down a received energy packet into a plurality of energy packets to be transmitted, the data packet associated with the received energy packet containing information regarding the target addresses and the power profiles of the energy packets to be transmitted,
transmitting each of the energy packets to be transmitted with the power profiles associated therewith to a respective receiver, and
transmitting the data packets, associated with the energy packets to be transmitted, to the same receivers as the energy packets.

7. The method according to any one of claims 1 to 6, **characterised in that** it comprises a store management for an energy store associated with a consumer, the store management defining at least one level mark of the energy store and then transmitting a request for energy or an offer for energy to the network when the level of the store exceeds or falls below the level mark.

8. The method according to any one of claims 1 to 7, **characterised in that** it comprises a power limit which defines the power which can be drawn by a consumer from the network.

9. A computer program comprising a program code for carrying out a method according to any one of claims 1 to 8, wherein the computer program is preferably stored on a machine-readable data carrier and/or wherein the computer program is preferably loaded on a computer system.

10. An electricity grid (1000), comprising
at least one generator (2000) for electrical energy,
at least one network node (1100, 1100.a - 1100.f) and
at least one consumer (3000),
wherein the generator (2000), the network node (1100, 1100.a - 1100.f) and the consumer (3000) are designed and interconnected in such a way that, during operation, electrical energy can be transmitted in the form of at least one energy packet having a predetermined amount of energy from the generator (2000), via the network node (1100, 1100.a - 1100.f) to the consumer (3000),
wherein a power profile TP(t) determines which power is to be maximally transmitted for the energy packet at a moment in time t,
wherein the generator (2000), the network node (1100, 1100.a - 1100.f) and the consumer (3000) are designed and interconnected in such a way that, during operation, a data packet associated with the energy packet is transmittable from the generator (2000), via the network node (1100, 1100.a - 1100.f) to the consumer (3000), wherein the data packet is transmitted in such a way that when arriving at a network node the data packet arrives before the energy packet,
wherein the power profile TP(t) is transmitted as information in the data packet, and
wherein the network node (1100, 1100.a - 1100.f) comprises a device for the autonomous and self-organised routing for the directional transmission of the energy packet with use of the data packet comprising
a receiving device (1132.a) for receiving a data packet,
a receiving device (1131.a, 1131.b) for receiving an energy packet associated with the data packet,
a device (1132) for determining a receiver from the information contained in the data packet,
a device for selecting a line for the transmission of the energy packet with the aid of the information contained in the data packet,
a device (1132.b) for transmitting the data packet to the previously determined receiver,
wherein the device (1132.b) for transmitting the data packet is connected to the device (1132) for determining the receiver,
a device (1131.b) for transmitting the energy packet with the power profile TP(t) associated with the data packet, which energy packet is defined by the voltage U(t), the electric current I(t) and the duration T of the packet,
wherein the device (1131.b) for transmitting the energy packet is connected to the device (1132) for determining the receiver,
wherein the network node (1100, 1100.a - 1100.f) is designed in such a way that it transmits the data packet and the energy packet to the same receiver, and
wherein the device for transmitting the energy packet comprises at least one controllable switch which is connected to the device for transmitting the data packet in such a way that it can be controlled thereby for controlling the power transmitted at a moment in time t according to the power profile TP(t) of the energy packet to be transmitted.

11. The electricity grid according to claim 10, **characterised in that** the generator and/or the network node and/or the consumer comprise a storage for electricity.

12. The network node according to claim 10, **characterised in that** the network node is connected to a first physical network for transmission of the energy packet, and to a second physical network for transmission of the data packet.

13. The network node according to either claim 10 or 12, **characterised in that** the network node comprises a transport plane and a signalling and control plane (SCP).

## Revendications

1. Procédé de transport d'énergie électrique par le biais d'un réseau d'alimentation électrique (1000) comportant au moins un générateur (2000) d'énergie électrique, au moins un noeud de réseau (1100, 1100.a - 1100.f) et au moins un consommateur (3000), dans lequel l'énergie électrique est transportée sous la forme d'au moins un paquet d'énergie depuis le générateur (2000) jusqu'au consommateur (3000) par le biais du noeud de réseau,
avec fixation d'un profil de puissance TP(t) pour le paquet d'énergie à transporter, où le profil de puissance TP(t) spécifie la puissance qui sera transportée au maximum pour le paquet d'énergie à un instant t,
où est associé au paquet d'énergie un paquet de données qui est transmis avec le paquet d'énergie de façon telle que, lors de l'arrivée sur un noeud de réseau, le paquet de données arrive dans le temps avant le paquet d'énergie,
le profil de puissance TP(t) étant transmis en tant qu'information avec le paquet de données,
le paquet d'énergie étant acheminé au noeud de réseau (1100.a -1100.f) de manière autonome et auto-organisée depuis le générateur (2000) vers le consommateur (3000) et l'acheminement comprenant les étapes suivantes :
la réception du paquet de données,
la réception du paquet d'énergie associé au paquet de données,
la détermination d'un récepteur à partir de l'information contenue dans le paquet de données,
la sélection d'une ligne pour le transport du paquet d'énergie à l'aide de l'information contenue dans le paquet de données,
le transport du paquet de données au récepteur déterminé au préalable et la libération de la ligne sélectionnée à l'aide d'un interrupteur pouvant être commandé, et
le transport du paquet d'énergie associé au paquet de données avec le profil de puissance spécifié TP(t), qui est défini par la tension U(t), l'intensité électrique 1(t) et la durée temporelle T du paquet, vers le même récepteur déterminé au préalable, par la régulation de la puissance transmise à un instant t à l'aide du profil de puissance TP(t) du paquet d'énergie à transporter à l'aide de l'interrupteur pouvant être commandé.

2. Procédé selon la revendication 1, **caractérisé en ce que** le paquet de données et le paquet d'énergie sont transportés par le biais de la même ligne électrique et/ou **en ce que** le paquet de données est transporté par le biais d'un réseau de données et le paquet d'énergie est transporté par le biais d'un réseau d'alimentation, le réseau de données et le réseau d'alimentation étant physiquement séparés l'un de l'autre.

3. Procédé selon l'une des revendications 1 ou 2, **caractérisé en ce que** le réseau d'alimentation et le réseau de données forment ensemble un réseau logique qui comprend un niveau de transport et un niveau de signalisation et de contrôle (SCP).

4. Procédé selon l'une des revendications 1 à 3, **caractérisé en ce qu'**il comporte en outre l'étape suivante :
la définition de la durée temporelle T du paquet d'énergie à transporter, la durée temporelle T du paquet d'énergie étant de préférence un multiple entier de la durée temporelle dt d'une trame d'énergie élémentaire.

5. Procédé selon l'une des revendications 1 à 4, **caractérisé en ce qu'**il comporte en outre les étapes suivantes :
le regroupement de plusieurs paquets d'énergie reçus en un paquet d'énergie à transporter, où chacun des paquets d'énergie reçus présente un profil de puissance P(t) qui spécifie la puissance maximale que le paquet d'énergie met à disposition à un instant t,
dans lequel, lors du regroupement, les profils de puissance P(t) des paquets d'énergie reçus sont additionnés en un profil de puissance TP(t) du paquet d'énergie à transporter, et
le transfert au récepteur des adresses de destination et des profils de puissance P(t) des paquets d'énergie reçus dans un paquet de données associé au paquet d'énergie.

6. Procédé selon l'une quelconque des revendications 1 à 5, **caractérisé en ce qu'**il comporte en outre les étapes suivantes :
la décomposition d'un paquet d'énergie reçu en plusieurs paquets d'énergie à transporter, où le paquet de données associé au paquet d'énergie reçu contient des informations sur les adresses de destination et les profils de puissance du paquet d'énergie à transmettre,
le transport vers un récepteur respectif des paquets d'énergie à transporter avec les profils de puissance qui leur sont associés, et
le transport des paquets de données associés aux paquets d'énergie à transporter aux mêmes récepteurs que les paquets d'énergie.

7. Procédé selon l'une des revendications 1 à 6, **caractérisé en ce qu'**il comprend une gestion d'accumulateur pour accumulateur d'énergie associé à un consommateur, dans lequel la gestion d'accumulateur définit au moins une marque de niveau de remplissage de l'accumulateur d'énergie et transmet ensuite au réseau, lorsque le niveau de remplissage de l'accumulateur passe au-dessus ou en dessous de la marque de niveau de remplissage, une demande d'énergie ou une offre d'énergie.

8. Procédé selon l'une des revendications 1 à 7, **caractérisé en ce qu'**il comprend une limitation de puissance, qui limite la puissance pouvant être soutirée du réseau par un consommateur.

9. Programme informatique comportant un code de programme permettant l'exécution d'un procédé selon l'une des revendications 1 à 8,
dans lequel le programme informatique est de préférence stocké sur un support de données lisible par machine et/ou dans lequel le programme informatique est de préférence chargé sur un système informatique.

10. Réseau d'alimentation électrique (1000) comportant
au moins un générateur (2000) d'énergie électrique,
au moins un noeud de réseau (1100, 1100.a - 1100.f), et
au moins un consommateur (3000),
dans lequel le générateur (2000), le noeud de réseau (1100, 1100.a - 1100.f) et le consommateur (3000) sont conçus et reliés entre eux de façon telle que, en service, de l'énergie électrique peut être transportée sous la forme d'au moins un paquet d'énergie avec une quantité d'énergie prédéfinie du générateur (2000) au consommateur (3000) par le biais du noeud de réseau (1100, 1100.a - 1100.f),
dans lequel un profil de puissance TP(t) spécifie pour le paquet d'énergie à transporter la puissance qui est transportée au maximum pour le paquet d'énergie à un instant t,
dans lequel le générateur (2000), le noeud de réseau (1100, 1100.a - 1100.f) et le consommateur (3000) sont conçus et reliés entre eux de façon telle que, en service, un paquet de données associé au paquet d'énergie peut être transporté par le générateur (2000), par le biais du noeud de réseau (1100, 1100.a - 1100.f), vers le consommateur (3000), le paquet de données étant transporté de telle sorte que, lors de l'arrivée sur un noeud de réseau, le paquet de données arrive dans le temps avant le paquet d'énergie,
le profil de puissance TP(t) étant transporté en tant qu'information dans le paquet de données et le noeud de réseau (1100, 1100.a - 1100.f) comprenant, pour le transport directionnel du paquet d'énergie à l'aide du paquet de données, un dispositif qui permet un acheminement autonome et auto-organisé, avec
un dispositif de réception (1132.a) pour la réception d'un paquet de données,
un dispositif de réception (1131.a, 1131.b) pour la réception d'un paquet d'énergie associé au paquet de données,
un dispositif (1132) de détermination d'un consommateur à partir de l'information contenue dans le paquet de données,
un dispositif de sélection d'une ligne pour le transport du paquet d'énergie à l'aide de l'information contenue dans le paquet de données,
un dispositif (1132.b) de transport du paquet de données vers le consommateur déterminé au préalable,
où le dispositif (1132.b) pour le transport du paquet de données est relié au dispositif (1132) de détermination du consommateur,
un dispositif (1131.b) de transport du paquet d'énergie associé au paquet de données avec le profil de puissance TP(t) qui est défini par la tension U(t), l'intensité électrique I(t) et la durée temporelle T du paquet,
le dispositif (1131.b), pour transporter le paquet d'énergie, étant relié au dispositif (1132) de détermination du consommateur,
le noeud de réseau (1100, 1100.a - 1100.f) étant conçu de façon telle que, en service, il transporte le paquet de données et le paquet d'énergie au même consommateur, et
le dispositif de transport du paquet d'énergie comprenant au moins un interrupteur pouvant être commandé qui est relié au dispositif de transport du paquet de données de façon telle qu'il peut être commandé par celui-ci pour réguler la puissance livrée à un instant t à l'aide du profil de puissance TP(t) du paquet d'énergie à transporter.

11. Réseau d'alimentation électrique selon la revendication 10, **caractérisé en ce que** le générateur et/ou le noeud de réseau et/ou le consommateur comprennent un accumulateur d'énergie électrique.

12. Réseau d'alimentation électrique selon la revendication 10, **caractérisé en ce que** le noeud de réseau est relié à un premier réseau physique destiné au transport du paquet d'énergie et à un second réseau physique destiné au transport du paquet de données.

13. Réseau d'alimentation électrique selon la revendication 10 ou 12, **caractérisé en ce que** le noeud de réseau comprend un niveau de transport et un niveau de signalisation et de contrôle (SCP).
